(19) Europäisches Patentamt
European Patent Office
Office européen des brevets

(11) EP 4 324 647 A1

(12) EUROPEAN PATENT APPLICATION
published in accordance with Art. 153(4) EPC

(43) Date of publication:
**21.02.2024 Bulletin 2024/08**

(21) Application number: **22788369.1**

(22) Date of filing: **11.04.2022**

(51) International Patent Classification (IPC):
***B32B 27/36*** (2006.01) ***B32B 37/15*** (2006.01)
***C08L 67/06*** (2006.01) ***C08J 5/18*** (2006.01)
***C08L 67/04*** (2006.01) ***B29C 55/12*** (2006.01)

(52) Cooperative Patent Classification (CPC):
**B29C 55/12; B32B 27/36; B32B 37/15; C08J 5/18; C08L 67/04; C08L 67/06;** Y02W 90/10

(86) International application number:
**PCT/KR2022/005195**

(87) International publication number:
**WO 2022/220513 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.04.2021 KR 20210050149**
**14.05.2021 KR 20210062999**

(71) Applicant: **SK microworks Co., Ltd.**
**Suwon-si, Gyeonggi-do 16336 (KR)**

(72) Inventors:
- **OH, Mi Ok**
  **Suwon-si, Gyeonggi-do 16338 (KR)**
- **LEE, Deuk-Young**
  **Suwon-si, Gyeonggi-do 16338 (KR)**
- **YEON, Jewon**
  **Suwon-si, Gyeonggi-do 16338 (KR)**

(74) Representative: **Dehns**
**St. Bride's House**
**10 Salisbury Square**
**London EC4Y 8JD (GB)**

# (54) BIAXIALLY STRETCHED FILM, LAMINATE, AND ECO-FRIENDLY PACKAGING MATERIAL COMPRISING FILM

(57) The present invention relates to a biaxially stretched film containing polylactic acid (PLA) and polyhydroxy alkanoate (PHA), a laminate, and an eco-friendly packaging material comprising the film. Specifically, the biaxially stretched film of the present invention contains a specific range of content of PHA and satisfies a specific range of flexibility-noise complex index (LSN), and thus can improve optical and thermal characteristics and reduce the degree of noise, while having excellent strength and flexibility. In addition, the laminate of the present invention comprises first and second layers having a specific composition and thus can attain the improvement in the above characteristics and maintain excellent interlayer adhesive characteristics due to interlayer compatibility of the first and second layers. Therefore, the biaxially stretched film and the laminate can be utilized as packaging materials in various fields, thereby providing high-quality packaging materials.

Fig. 1

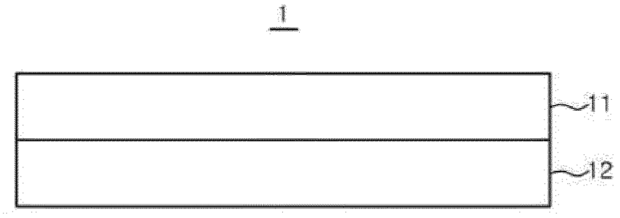




Processed by Luminess, 75001 PARIS (FR)

## Description

### Technical Field

The present invention relates to a biaxially oriented film, to a laminate, and to an environment-friendly packing material comprising the film.

### Background Art

In recent years, the use of disposable products is increasing from the viewpoint of non-face-to-face consumption culture, hygiene, and the like. In particular, the use of packaging materials for food is remarkably increasing.

Examples of a general-purpose plastic film currently used in the packaging materials include polyvinyl chloride (PVC), polyethylene (PE), or polypropylene (PP) derived from petroleum. However, there are a lot of restrictions on the use of PVC films because harmful substances such as dioxins are generated when they are incinerated. Polyethylene films have poor dimensional stability and very low mechanical properties, which limits their use to low-grade packaging materials. Films with good mechanical properties attributable to a relatively stable molecular structure include polypropylene films. However, upon their use for packaging purposes, most of them are landfilled and hardly decomposed and accumulated due to their chemical and biological stability. This nature of plastic films leads to serious environmental problems as a cause of global soil pollution.

In addition, in recent years, a lot of research on polylactic acid (PLA), which is an aliphatic polyester with high biodegradability of the resin itself, is also being conducted. However, a polylactic acid film lacks flexibility and makes a lot of noise; thus, its use for packaging is limited.

Accordingly, a study has been also conducted on a film using a polylactic acid mixed with other resins.

For example, Korean Laid-open Patent Publication No. 2014-0106882 discloses a film in which a mixture of polylactic acid and polybutyleneadipate terephthalate (PBAT) is used. In such a case, however, the compatibility between the two materials is insufficient, resulting in problems in that transparency is deteriorated, thermal properties are reduced, and it is difficult to achieve satisfactory flexibility and strength at the same time.

In addition, research on a multilayer film in which a resin layer containing a polylactic acid is laminated with another resin layer such as polytriethylene terephthalate (PTT) has been conducted. In such a case, however, not only is it difficult to achieve a satisfactory noise reduction effect or flexibility, but there may be problems in that the compatibility between the resin layers is deteriorated, which causes poor interlayer adhesion characteristics or delamination from each other, thereby adversely affecting workability and productivity.

[Prior Art Document]

[Patent Document]

(Patent Document 1) Korean Laid-open Patent Publication No. 2014-0106882

## Detailed Description of the Invention

### Technical Problem

The present invention has been devised to solve the problems of the prior art described above.

An object of the present invention is to provide a biaxially oriented film having excellent strength and flexibility at the same time, excellent transparency owing to compatibility between resins, and an improved noise level and thermal properties.

Another object of the present invention is to provide a laminate having excellent strength and flexibility at the same time, an improved noise level and thermal properties, and excellent interlayer adhesion characteristics owing to good interlayer compatibility between the first layer and the second layer.

Still another object of the present invention is to provide a process for preparing a laminate that can achieve the above characteristics, along with excellent processability and productivity, in an economical and efficient way.

Still another object of the present invention is to provide a packaging material, which is biodegradable and environmentally friendly and has high quality, by using a biaxially oriented film or a laminate having the above characteristics.

**Solution to the Problem**

The present invention provides a biaxially oriented film, which comprises polylactic acid (PLA) and polyhydroxyalkanoate (PHA), wherein the amount of the polyhydroxyalkanoate (PHA) is greater than 0% by weight to less than 30% by weight based on the total weight of the biaxially oriented film, and when the thickness of the film is 19 to 21 μm, the LSN as represented by the following Equation 1-1 is 20 or less:

<Equation 1-1>

$$LSN = N_{AVG} \times LS$$

In Equation 1-1, $N_{AVG}$ is the average noise level (dB), exclusive of units, calculated by measuring the maximum noise level 5 times in which a sound level meter of Class 2 specified in KS C IEC61672-1 is directed to a noise source, and a biaxially oriented film specimen with a width of 21 cm and a length of 29.5 cm is shaken at a height of 1.2 to 1.5 m from the ground at a speed of 120 times/minute for 1 minute.

LS is the loop stiffness (gf), exclusive of units, measured as the load at the center of a loop in which a biaxially oriented film specimen with a width of 1.5 cm and a length of 18 cm is fixed in a loop shape to a loop stiffness tester according to ASTM D747.

In addition, the present invention provides a laminate, which comprises a first layer comprising a first polylactic acid (PLA) and polyhydroxyalkanoate (PHA); and a second layer disposed on one side of the first layer and comprising a second polylactic acid (PLA), wherein the first layer comprises greater than 0% by weight to less than 30% by weight of the polyhydroxyalkanoate (PHA) based on the total weight of the first layer.

In addition, the present invention provides a process for preparing a laminate, which comprises preparing a first resin comprising a first polylactic acid (PLA) and polyhydroxyalkanoate (PHA) and a second resin comprising a second polylactic acid (PLA) (step 1); melt-coextruding the first resin and the second resin to obtain a two-layer laminated sheet (step 2); and biaxially stretching and heat-setting the laminated sheet to obtain a laminate (step 3), wherein the laminate comprises a first layer comprising the first polylactic acid (PLA) and the polyhydroxyalkanoate (PHA); and a second layer disposed on one side of the first layer and comprising the second polylactic acid (PLA), and the first layer comprises greater than 0% by weight to less than 30% by weight of the polyhydroxyalkanoate (PHA) based on the total weight of the first layer.

Further, the present invention provides an environment-friendly packaging material, which comprises the biaxially oriented film or laminate.

**Advantageous Effects of the Invention**

The biaxially oriented film according to the present invention comprises polylactic acid (PLA) and polyhydroxyalkanoate (PHA), in which PHA is employed in a specific content range, and the LSN of the film satisfies a specific range. Thus, it may have excellent strength and flexibility at the same time, a low noise level, and enhanced optical properties and thermal properties.

In addition, the laminate according to the present invention comprises a first layer and a second layer each having a specific composition. Thus, it may have excellent strength and flexibility at the same time, a low noise level, and enhanced optical properties and thermal properties. Further, it may maintain excellent interlayer adhesion characteristics owing to good interlayer compatibility between the first layer and the second layer.

In addition, the process for preparing a laminate according to the present invention is economical and efficient and can further enhance processability and productivity.

Further, since the biaxially oriented film and the laminate are biodegradable and completely decomposed when buried to have environmentally friendly characteristics, they can be used in various fields as packaging materials to provide high-quality packaging materials.

**Brief Description of the Drawing**

Fig. 1 is a schematic diagram of a laminate according to an embodiment of the present invention.
Fig. 2 is a schematic diagram of a laminate according to another embodiment of the present invention.
Fig. 2 is a schematic diagram of a laminate according to still another embodiment of the present invention.
Fig. 4 schematically shows a process for preparing a laminate according to an embodiment of the present invention.

**Best Mode for Carrying out the Invention**

Hereinafter, the present invention will be described in detail with reference to embodiments. The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In the present specification, a singular expression is interpreted to cover a singular or plural number that is interpreted in context unless otherwise specified.

In addition, all numbers expressing the physical properties, dimensions, reaction conditions, and the like of elements used herein are to be understood as being modified by the term "about" unless otherwise indicated.

Meanwhile, throughout the present specification, the terms first layer, second layer, or first, second, and the like are used to describe various components. But the components should not be limited by the terms. The terms are used only for the purpose of distinguishing one component from another.

In addition, the references for "one side" and the "other side" or "top" and "bottom" of each component are described based on the drawings. These terms are only for the purpose of distinguishing the components and may be interchangeable when applied in practice.

In the present specification, in the case where an element is mentioned to be formed "on" or "under" another element, it means not only that one element is directly formed "on" or "under" another element, but also that one element is indirectly formed on or under another element with other element(s) interposed between them.

In addition, for the sake of description, the sizes of individual elements in the appended drawings may be exaggeratingly depicted and do not indicate the actual sizes. In addition, the same reference numerals refer to the same elements throughout the specification.

**[Biaxially oriented film]**

In an embodiment, there is provided a biaxially oriented film, which comprises polylactic acid (PLA) and polyhydroxyalkanoate (PHA), wherein the amount of the polyhydroxyalkanoate (PHA) is greater than 0% by weight to less than 30% by weight based on the total weight of the biaxially oriented film, and when the thickness of the film is 19 to 21 μm, the LSN as represented by the following Equation 1-1 is 20 or less:

<Equation 1-1>

$$LSN = N_{AVG} \times LS$$

In Equation 1-1, $N_{AVG}$ is the average noise level (dB), exclusive of units, calculated by measuring the maximum noise level 5 times in which a sound level meter of Class 2 specified in KS C IEC61672-1 is directed to a noise source, and a biaxially oriented film specimen with a width of 21 cm and a length of 29.5 cm is shaken at a height of 1.2 to 1.5 m from the ground at a speed of 120 times/minute for 1 minute.

LS is the loop stiffness (gf), exclusive of units, measured as the load at the center of a loop in which a biaxially oriented film specimen with a width of 1.5 cm and a length of 18 cm is fixed in a loop shape to a loop stiffness tester according to ASTM D747.

In an embodiment, as polylactic acid (PLA) and polyhydroxyalkanoate (PHA) are employed, it is possible to enhance flexibility and lower noise levels. In particular, as polyhydroxyalkanoate (PHA) is employed in an amount of greater than 0% by weight to less than 30% by weight based on the total weight of the biaxially oriented film, it is possible to enhance flexibility while maintaining a proper level of strength, to further enhance optical properties, and to provide a film having a low heat shrinkage rate at high temperatures of 100°C or higher and a low thickness variation. Further, as the LSN represented by Equation 1-1 is controlled to 20 or less, it is possible to further improve strength, flexibility, and noise levels. Further, as a biaxially oriented film obtained by stretching the above film in both directions is provided, the physical properties and moldability of the film are further enhanced, thereby achieving a high-quality packaging material, which is one of the technical features.

Hereinafter, the biaxially oriented film according to an embodiment will be described in more detail.

The biaxially oriented film according to an embodiment comprises polylactic acid (PLA) and polyhydroxyalkanoate (PHA).

Polylactic acid (PLA) is based on biomass, unlike petroleum-based resins. It is environmentally friendly as regenerable resources can be used, carbon dioxide as the main cause of global warming is less emitted than conventional resins during production, and it is biodegraded by moisture and microorganisms upon landfill.

The polylactic acid (PLA) may have a weight average molecular weight (Mw) of 100,000 to 1,000,000 g/mole, for example, 100,000 to 800,000 g/mole, 100,000 to 500,000 g/mole, or 100,000 to 300,000 g/mole. The weight average molecular weight (Mw) may be measured by gel permeation chromatography (GPC). If the weight average molecular weight (Mw) of the polylactic acid (PLA) is outside the above range, the mechanical strength and thermal resistance of the film may be deteriorated as compared with the case where it is within the above range.

The polylactic acid (PLA) may comprise L-lactic acid, D-lactic acid, D,L-lactic acid, or a combination thereof. Specifically, the polylactic acid (PLA) may be a random copolymer of L-lactic acid and D-lactic acid. In such an event, the content of L-lactic acid may be 80% by weight to 99% by weight, 83% by weight to 99% by weight, or 85% by weight to 99% by weight, based on the total weight of the polylactic acid.

The polylactic acid (PLA) may have a melting temperature (Tm) of 100°C to 250°C, 110°C to 220°C, or 120°C to 200°C.

The polylactic acid (PLA) may have a glass transition temperature (Tg) of 30°C to 80°C, 40°C to 80°C, 40°C to 70°C, or 45°C to 65°C.

The polylactic acid (PLA) may be employed in an amount of greater than 70% by weight, 75% by weight or more, 80% by weight or more, 85% by weight or more, 88% by weight or more, 90% by weight or more, 93% by weight or more, or 95% by weight or more, based on the total weight of the biaxially oriented film. In addition, the polylactic acid (PLA) may be employed in an amount of less than 100% by weight, 99% by weight or less, 98% by weight or less, 97% by weight or less, or 95% by weight or less, based on the total weight of the biaxially oriented film.

Specifically, the polylactic acid (PLA) may be employed in an amount of greater than 70% by weight to less than 100% by weight, greater than 70% by weight to 99% by weight, 75% by weight to 99% by weight, 75% by weight to 98% by weight, 75% by weight to 97% by weight, 80% by weight to 97% by weight, 85% by weight to 97% by weight, 90% by weight to 97% by weight, 95% by weight to less than 100% by weight, 95% by weight to 97% by weight, or 90% by weight to 95% by weight, based on the total weight of the biaxially oriented film.

If the content of the polylactic acid (PLA) is too small, tensile strength may be decreased, heat shrinkage rate may be increased, and optical properties such as transparency and light transmittance may be deteriorated. On the other hand, if the content of the polylactic acid (PLA) is too large, brittleness may be increased, flexibility may be decreased, so that it may be readily broken, and there may be a problem of severe noise.

In particular, the polylactic acid (PLA) is very brittle and has the characteristic that the film would be hard when the temperature range for use thereof is 20°C or lower; thus, when the film is impacted in winter, it tends to crack and break easily. If the temperature range for use thereof is 35°C or higher, the film tends to lose its elasticity to become soft and makes severe noise, so that its use is limited.

Thus, it is characterized in an embodiment in that polyhydroxyalkanoate (PHA) having excellent flexibility and a low noise level is mixed with the polylactic acid (PLA).

In particular, in the biaxially oriented film according to an embodiment, the content of polyhydroxyalkanoate (PHA) contained in the biaxially oriented film is important in order to achieve excellent strength and flexibility, enhanced optical properties and thermal properties, and an improved noise level.

The biaxially oriented film according to an embodiment may comprise polyhydroxyalkanoate (PHA) in an amount of greater than 0% by weight to less than 30% by weight based on the total weight of the biaxially oriented film.

Specifically, the biaxially oriented film may comprise the polyhydroxyalkanoate (PHA) in an amount of greater than 0% by weight to less than 30% by weight, 1% by weight to less than 30% by weight, 1% by weight to 25% by weight, 2% by weight to 25% by weight, 3% by weight to 25% by weight, 3% by weight to 20% by weight, 3% by weight to 15% by weight, 3% by weight to 10% by weight, greater than 0% by weight to 5% by weight, 3% by weight to 5% by weight, or 5% by weight to 10% by weight, based on the total weight of the biaxially oriented film.

If the content of the polyhydroxyalkanoate (PHA) is too large, tensile strength may be decreased, heat shrinkage rate may be increased, extrusion processability is deteriorated, and optical properties may be deteriorated. On the other hand, if the content of the polyhydroxyalkanoate (PHA) is too small, brittleness may be increased, flexibility may be decreased, so that it may be readily broken, and there may be a problem of increased noise.

According to an embodiment, the mixing weight ratio of the polylactic acid (PLA) and the polyhydroxyalkanoate (PHA) may be greater than 70 to less than 100:greater than 0 to less than 30, for example, 80 to 97:3 to 20, for example, 80 to 95:5 to 20, for example, 90 to 97:3 to 10, for example, 90 to 95:5 to 10, or, for example, 95 to 97:3 to 5. If the mixing weight ratio of the polylactic acid (PLA) and polyhydroxyalkanoate (PHA) satisfies the above range, flexibility may be enhanced while an appropriate level of strength is maintained, optical properties and thermal properties may be improved, and noise level may be lowered.

According to an embodiment, the polyhydroxyalkanoate (PHA) may be a copolymerized polyhydroxyalkanoate (PHA).

Specifically, the copolymerized polyhydroxyalkanoate (PHA) may be polyhydroxyalkanoate (PHA) having a controlled crystallinity.

For example, the polyhydroxyalkanoate (PHA) comprises a copolymerized polyhydroxyalkanoate comprising

at least one unit of the following Formula 1 and at least one unit of the following Formula 2, respectively, and it may be a copolymerized polyhydroxyalkanoate (PHA) with controlled crystallinity:

[Formula 1]

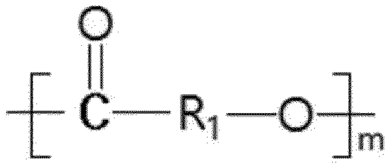

in Formula 1, $R_1$ is substituted $C_1$-$C_8$ alkylene, and m is an integer of 1 or more,

[Formula 2]

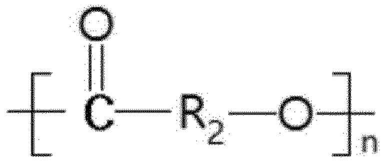

in Formula 2, $R_2$ is substituted or unsubstituted $C_1$-$C_8$ alkylene, and n is an integer of 1 or more.

Here, the term "substituted" in Formulae 1 and 2 may encompass a substituted or unsubstituted alkyl group, specifically, a substituted or unsubstituted $C_1$-$C_8$ alkyl group, unless otherwise specified.

The polyhydroxyalkanoate (PHA) may be a polyester comprising the unit of Formula 1 and the unit of Formula 2 only as a polymerization unit. It comprises the unit of Formula 1 and the unit of Formula 2 as a polymerization unit and may further comprise other polymerization units in addition thereto. In addition, the unit of Formula 2 may be randomly repeated.

According to an embodiment, in Formula 1, $R_1$ may be, for example, substituted $C_2$-$C_8$ alkylene, substituted $C_3$-$C_8$ alkylene, or substituted $C_3$-$C_6$ alkylene. In addition, m may be 1 to 12,000.

In Formula 2, $R_2$ may be, for example, substituted or unsubstituted $C_2$-$C_8$ alkylene, substituted or unsubstituted $C_3$-$C_8$ alkylene, or substituted or unsubstituted $C_4$-Cs alkylene. For example, $R_2$ in Formula 2 may comprise unsubstituted alkylene. In addition, n may be 1 to 12,000.

In addition, in Formulae 1 and 2, the substituent may comprise $C_1$-$C_8$ alkyl, $C_1$-$C_6$ alkyl, or $C_1$-$C_4$ alkyl, respectively.

Specifically, the polyhydroxyalkanoate (PHA) may comprise at least one unit of the following Formula 1-1 and at least one unit of the following Formula 2-1, respectively.

[Formula 1-1]

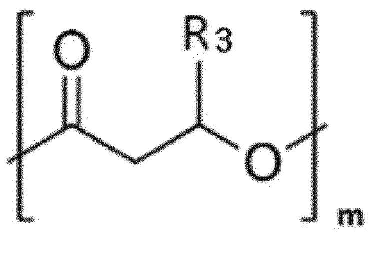

in Formula 1-1, $R_3$ is methyl, ethyl, or propyl, and m is an integer of 1 or more,

[Formula 2-1]

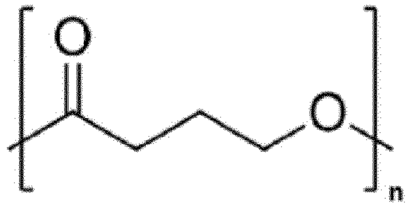

in Formula 2-1, n is an integer of 1 or more.

Specifically, in Formula 1-1, $R_3$ may be methyl, and m may be 1 to 12,000.

In Formula 2-1, n may be 1 to 12,000.

The polyhydroxyalkanoate (PHA) whose crystallinity has been adjusted may be one in which crystallinity and amorphousness are adjusted by increasing irregularities in its molecular structure. Specifically, it may be one in which the types of monomers, the ratio of monomers, or the type and/or content of isomers are adjusted.

According to an embodiment, the polyhydroxyalkanoate (PHA) is a copolymerized polyhydroxyalkanoate (PHA) comprising the unit of Formula 1 and the unit of Formula 2, wherein the content of the unit of Formula 2 may be 1% by weight or more, 3% by weight or more, 5% by weight or more, 10% by weight or more, and may be 60% by weight or less, 55% by weight, or 50% by weight or less, based on the total weight of the copolymerized polyhydroxyalkanoate.

For example, the polyhydroxyalkanoate (PHA) is a copolymerized polyhydroxyalkanoate (PHA) comprising the unit of Formula 1 and the unit of Formula 2, wherein the content of the unit of Formula 2 may be 1 to 60% by weight, 5 to 50% by weight, 10 to 60% by weight, 10 to 50% by weight, 15 to 60% by weight, 15 to 50% by weight, 20 to 60% by weight, 20 to 50% by weight, 25 to 60% by weight, 25 to 50% by weight, 30 to 60% by weight, 30 to 50% by weight, 35 to 60% by weight, 35 to 50% by weight, 40 to 60% by weight, 40 to 50% by weight, 45 to 60% by weight, 45 to 50% by weight, or 46 to 50% by weight.

According to an embodiment, the polyhydroxyalkanoate (PHA) may comprise isomers. For example, the polyhydroxyalkanoate (PHA) may comprise structural isomers, enantiomers, or geometric isomers. Specifically, the polyhydroxyalkanoate (PHA) may comprise structural isomers.

According to an embodiment, the copolymerized polyhydroxyalkanoate (PHA) may be an amorphous polyhydroxyalkanoate (PHA).

When the copolymerized polyhydroxyalkanoate (PHA) is an amorphous polyhydroxyalkanoate (PHA), there is compatibility between the resins as compared with the case where a crystalline polyhydroxyalkanoate (PHA) is used as the polyhydroxyalkanoate (PHA) and mixed with the polylactic acid (PLA) to prepare a film, which may produce the effect that optical properties are enhanced.

When the copolymerized polyhydroxyalkanoate (PHA) is an amorphous polyhydroxyalkanoate (PHA), the amorphous polyhydroxyalkanoate (PHA) is a copolymerized polyhydroxyalkanoate (PHA) comprising the unit of Formula 1 and the unit of Formula 2, wherein the unit of Formula 2 may be employed in an amount of 15 to 60% by weight based on the total weight of the copolymerized polyhydroxyalkanoate (PHA).

As the content of the unit of Formula 2 is increased in the polyhydroxyalkanoate (PHA), its amorphousness may be increased. Thus, the content of the unit of Formula 2 in the amorphous polyhydroxyalkanoate (PHA) may be important in the biaxially oriented film according to an embodiment.

For example, the amorphous polyhydroxyalkanoate (PHA) may comprise the unit of Formula 2 in an amount of 15 to 60% by weight, 15 to 50% by weight, 20 to 60% by weight, 20 to 50% by weight, 25 to 60% by weight, 25 to 50% by weight, 30 to 60% by weight, 30 to 50% by weight, 35 to 60% by weight, 35 to 50% by weight, 40 to 60% by weight, 40 to 50% by weight, 45 to 60% by weight, 45 to 50% by weight, or 46 to 50% by weight, based on the total weight of the copolymerized polyhydroxyalkanoate (PHA).

The biaxially oriented film according to an embodiment comprises the unit of Formula 2 in the above range; thus, when polyhydroxyalkanoate (PHA) is mixed with polylactic acid (PLA) and used, there is compatibility between the resins, resulting in an advantage in that the optical properties of the film can be further enhanced. If the unit of Formula 2 is less than 15% by weight in polyhydroxyalkanoate (PHA), compatibility between the resins may be deteriorated, which lowers transparency and light transmittance.

According to an embodiment, the amorphous polyhydroxyalkanoate (PHA) is a copolymerized polyhydroxyalkanoate (PHA) comprising a 3-hydroxybutyrate (3-HB) unit and a 4-hydroxybutyrate (4-HB) unit, wherein the 4-hydroxybutyrate (4-HB) unit may be employed in an amount of 15 to 60% by weight based on the total weight of the copolymerized polyhydroxyalkanoate (PHA).

As the content of the 4-hydroxybutyrate (4-HB) unit is increased in the polyhydroxyalkanoate (PHA), its amorphousness is increased. Thus, the content of the 4-hydroxybutyrate (4-HB) unit in the amorphous polyhydroxyalkanoate (PHA) may be important in the biaxially oriented film according to an embodiment.

For example, the 4-hydroxybutyrate (4-HB) unit may be employed in an amount of, for example, 20 to 60% by weight, for example, 25 to 60% by weight, for example, 25 to 50% by weight, for example, 30 to 60% by weight, for example, 30 to 50% by weight, for example, 35 to 60% by weight, for example, 35 to 50% by weight, for example, 40 to 60% by weight, for example, 40 to 50% by weight, for example, 45 to 60% by weight, for example, 45 to 50% by weight, for example, 46 to 60% by weight, or, for example, 46 to 50% by weight, based on the total weight of the copolymerized polyhydroxyalkanoate (PHA).

The biaxially oriented film according to an embodiment comprises the 4-hydroxybutyrate (4-HB) unit in the above range; thus, when polyhydroxyalkanoate (PHA) is mixed with polylactic acid (PLA) and used, there is compatibility between the resins, resulting in an advantage in that the optical properties of the film can be further enhanced. If the content of the 4-hydroxybutyrate (4-HB) unit is less than 15% by weight, compatibility between the resins may be deteriorated, which lowers optical properties.

The polyhydroxyalkanoate (PHA) may be a polyester comprising a 3-hydroxybutyrate unit (3-HB) and a 4-hydroxybutyrate (4-HB) unit only as a polymerized unit (i.e., the polymerization unit is composed of a 3-hydroxybutyrate unit (3-HB) and a 4-hydroxybutyrate unit (4-HB) only). Alternatively, it may comprise a 3-hydroxybutyrate unit (3-HB) and a 4-hydroxybutyrate (4-HB) unit as a polymerization unit and further comprise other polymerization units in addition thereto. In addition, the 4-hydroxybutyrate (4-HB) unit may be randomly repeated.

Examples of the other polymerization units include lactate (LA), glycolate (GA), 3-hydroxypropionate (3HP), 3-hydroxyvalerate (3HV), 5-hydroxyvalerate (5HV), 5-hydroxyhexanoate (5HH), 6-hydroxyhexanoate (6HH), 3-hydroxyhexanoate (3HH), and hydroxyalkanoates having 7 or more carbon atoms.

The polyhydroxyalkanoate (PHA) has a weight average molecular weight (Mw) of 100,000 g/mole to 1,000,000 g/mole, 100,000 g/mole to 900,000 g/mole, 120,000 g/mole to 850,000 g/mole, or 150,000 g/mole to 800,000 g/mole. The weight average molecular weight (Mw) may be measured by gel permeation chromatography (GPC).

The polyhydroxyalkanoate (PHA) may have a glass transition temperature (Tg) of -5°C to -50°C, -15°C to -40°C, and -20°C to -40°C. If the weight average molecular weight (Mw) and glass transition temperature (Tg) of the amorphous polyhydroxyalkanoate (PHA) satisfy the above ranges, optical properties such as transparency and light transmittance are enhanced, and it may be more advantageous for achieving the effects of improved noise and enhanced flexibility.

According to an embodiment, the biaxially oriented film may further comprise a filler.

The filler may comprise an organic filler, an inorganic filler, or a mixture thereof.

The organic filler may comprise an organic filler comprising a material selected from hard acrylate, polystyrene, nylon, and soft acrylate.

The inorganic filler may be at least one selected from the group consisting of barium sulfate, silica, and calcium carbonate.

The filler may be an inorganic filler and may comprise, for example, silica.

As the biaxially oriented film comprises the filler, its processability may be enhanced owing to excellent slip properties, thereby providing excellent quality.

In addition, the filler may have a particle diameter of 0.1 μm to 6.0 μm. For example, the particle diameter of the filler may be 1.0 μm to 5.5 μm or 2.0 to 5.2 μm.

The biaxially oriented film may comprise the filler in an amount of 0.01 to 3% by weight based on the total weight of the biaxially oriented film. For example, the biaxially oriented film may comprise the filler in an amount of 0.05 to 2.5% by weight, 0.1 to 2% by weight, 0.2 to 1.7% by weight, or 0.5 to 1.5% by weight, based on the total weight of the biaxially oriented film.

In the biaxially oriented film according to an embodiment, when the thickness of the film is 19 to 21 μm, the LSN as represented by the above Equation 1-1 may be 20 or less:

LSN expressed by Equation 1-1 refers to the product of the average noise level and the loop stiffness of the biaxially oriented film, which is an index indicating the degree of the composite characteristics of the flexibility and noise level of the biaxially oriented film (it may also be referred to as a flexible noise composite index). Thus, the LSN may be a measure indicating the quality of a packaging material comprising the biaxially oriented film.

The LSN may be lower as the average noise level ($N_{AVG}$) of the biaxially oriented film is lower; and it may be higher as the noise level ($N_{AVG}$) is higher. In addition, the LSN may be lower as the loop stiffness (LS) is lower; and it may be higher as the loop stiffness (LS) is higher.

When the LSN having the above characteristics satisfies the above range or less, the mechanical properties, optical properties, and thermal properties of the biaxially oriented film may be excellent, and the noise level may be reduced.

Specifically, the LSN of the biaxially oriented film may be, for example, 20 or less, 19 or less, 18 or less, 17 or less, 16 or less, or 15 or less. If the LSN of the biaxially oriented film exceeds 20, flexibility may be decreased, brittleness may be increased, and noise may be increased. Thus, when it is applied to a packaging material, its quality may be

deteriorated.

The LSN of the biaxially oriented film may be the same or different depending on the longitudinal direction (MD) and the transverse direction (TD) of the biaxially oriented film. Here, the longitudinal direction (MD) of the biaxially oriented film may refer to the machine direction. The transverse direction (TD) of the biaxially oriented film may refer to the width direction as a direction perpendicular to the longitudinal direction (MD).

Specifically, the $LSN_{MD}$ of the biaxially oriented film in the longitudinal direction (MD) may be, for example, 5 to 20, 5 to 19, 5 to 18, 10 to 18, 14 to 18, or 15 to 18.

The $LSN_{TD}$ of the biaxially oriented film in the transverse direction (TD) may be, for example, 5 to 20, 5 to 19, 8 to 19, 10 to 19, 12 to 19, or 13 to 19.

The biaxially oriented film may satisfy the $LSN_{MD}$ only, the $LSN_{TD}$ only, or both the $LSN_{MD}$ and the $LSN_{TD}$. In such a case, it is possible to enhance flexibility while maintaining a proper level of tensile strength and to reduce the noise in the biaxially oriented film according to an embodiment; thus, it is more advantageous for achieving the desired effect, and it may provide an environment-friendly packaging material with excellent quality.

Meanwhile, in Equation 1-1, the average noise level ($N_{AVG}$) of the biaxially oriented film is defined as an average noise level calculated by measuring the maximum noise level 5 times in which a sound level meter of Class 2 or higher specified in KS C IEC61672-1 is directed to a noise source, and one sheet of the biaxially oriented film is shaken at a height of 1.2 to 1.5 m from the ground at a specific speed for 1 minute. The noise level may be measured at a height of 1.2 to 1.5 m from the ground. If there is an obstacle exceeding 1.5 m in height at the measurement point, it may be measured at a point about 1.0 to 3.5 m away from the obstacle in the direction of the noise source.

To control the average noise level ($N_{AVG}$) in the biaxially oriented film to a specific range or lower may be desired from the viewpoint of providing a high-quality packaging material.

Specifically, the average noise level ($N_{AVG}$) of the biaxially oriented film may be, for example, 86 dB or less, for example, 85 dB or less, for example, 84 dB or less, for example, 83 dB or less, or, for example, 82.5 dB or less.

If the average noise level ($N_{AVG}$) of the biaxially oriented film is 86 dB or less, it is advantageous for controlling the LSN of Equation 1-1 to 20 or less, and it is possible to provide a high-quality packaging material by improving noise.

In addition, in Equation 1-1, the loop stiffness (LS) of the biaxially oriented film is measured as the load at the center of a loop in which a biaxially oriented film with a width of 1.5 cm and a length of 18 cm is fixed in a loop shape to a loop stiffness tester according to ASTM D747. It is an index indicating the degree of flexibility of the biaxially oriented film.

The loop stiffness (LS) of the biaxially oriented film may be 0.23 gf or less, 0.22 gf or less, 0.21 gf or less, or 0.20 gf or less. Specifically, the loop stiffness (LS) of the biaxially oriented film may be, for example, 0.10 to 0.23 gf, for example, 0.10 to 0.22 gf, for example, 0.10 to 0.21 gf, or, for example, 0.10 to 0.20 gf.

The lower the loop stiffness (LS) of the biaxially oriented film, the greater the flexibility. The higher the loop stiffness (LS) of the biaxially oriented film, the lower the flexibility.

In addition, the loop stiffness (LS) of the biaxially oriented film may be the same or different depending on the longitudinal direction (MD) and the transverse direction (TD) of the biaxially oriented film.

Specifically, the loop stiffness ($LS_{MD}$) of the biaxially oriented film in the longitudinal direction (MD) may be, for example, 0.10 to 0.23 gf, for example, 0.10 to 0.22 gf, for example, 0.12 to 0.22 gf, for example, 0.12 to 0.21 gf, or, for example, 0.15 to 0.21 gf.

The loop stiffness ($LS_{TD}$) of the biaxially oriented film in the transverse direction (TD) may be, for example, 0.10 to 0.23 gf, for example, 0.10 to 0.22 gf, for example, 0.12 to 0.22 gf, or, for example, 0.14 to 0.22 gf.

The biaxially oriented film may satisfy the $LS_{MD}$ only, the $LS_{TD}$ only, or both the $LS_{MD}$ and the $LS_{TD}$. In such a case, in the biaxially oriented film according to an embodiment, it is more effective to control the LSN represented by Equation 1-1 to the above range; thus, it is more advantageous for achieving the desired effect, and it may provide an environment-friendly packaging material with excellent quality.

Meanwhile, the biaxially oriented film may have a heat shrinkage rate ($S_{100}$) of 15% or less as represented by the following Equation 1-2:

<Equation 1-2>

$$\text{Heat shrinkage rate } (S_{100}) = \frac{L_{25} - L_{100}}{L_{25}} \times 100$$

In Equation 1-2, $L_{25}$ is the initial length (mm) of the biaxially oriented film specimen at 25°C, and $L_{100}$ is the length (mm) of the biaxially oriented film specimen after it has been left for 5 minutes in a hot air oven at 100°C.

The heat shrinkage rate ($S_{100}$) represented by Equation 1-2 is a value obtained by converting the degree of heat shrinkage of a biaxially oriented film specimen at a hot air temperature of 100°C into a percentage. It is a value calculated as a percentage of the change between the initial length of a biaxially oriented film specimen and the length

of the biaxially oriented film specimen after it has been left in the hot air oven for 5 minutes relative to the initial length of the biaxially oriented film specimen.

The heat shrinkage rate ($S_{100}$) may be calculated by cutting a biaxially oriented film into 150 mm in length and 2 cm in width regardless of the direction to prepare a specimen and then measuring the initial length thereof at room temperature and the length of the biaxially oriented film specimen after it has been left for 5 minutes in a hot air oven at 100°C.

The heat shrinkage rate ($S_{100}$) may be 15% or less, 12% or less, 10% or less, 9% or less, 8% or less, 7% or less, 6% or less, 5% or less, or 4.5% or less.

If the heat shrinkage rate ($S_{100}$) satisfies the above range, the degree of heat shrinkage is small at a hot air temperature of 100°C or higher, so that thermal properties may be enhanced, resulting in further improved printability and moldability.

In addition, the heat shrinkage rate ($S_{100}$) of the biaxially oriented film may be the same or different depending on the longitudinal direction (MD) and the transverse direction (TD) of the biaxially oriented film.

Specifically, the heat shrinkage rate ($S_{MD100}$) of the biaxially oriented film in the longitudinal direction (MD) may be 15% or less, 12% or less, 10% or less, 9% or less, 8% or less, 7% or less, 6% or less, 5% or less, 4.5% or less, or 4% or less.

The heat shrinkage rate ($S_{TD100}$) of the biaxially oriented film in the transverse direction may be, for example, 15% or less, 12% or less, 10% or less, 9% or less, 8% or less, 7% or less, 6% or less, 5% or less, or 4.5% or less.

If the heat shrinkage rates in the longitudinal direction (MD) and transverse direction (TD) of the biaxially oriented film exceed the above ranges, the shrinkage in the longitudinal and transverse directions due to hot air is severe during printing or lamination, which causes a printing problem, and curling upon printing is severe, which is not preferable.

Meanwhile, the biaxially oriented film according to an embodiment may have a molding index (FI) of 65 or more as represented by the following Equation 1-3:

<Equation 1-3>

$$\text{Molding index (FI)} = \frac{TS}{LS}$$

In Equation 1-3, TS is the tensile strength (kgf/mm$^2$), exclusive of units, measured at room temperature for a specimen that has been cut to have a length of about 100 mm and a width of 15 mm according to ASTM D882 and mounted between the chucks of a universal testing machine (UTM) in a distance of 50 mm.

LS is as defined above.

The molding index (FI) of the biaxially oriented film is a ratio of the tensile strength to the loop stiffness of the biaxially oriented film and may stand for a measure of whether tensile strength and flexibility are appropriate.

That is, according to an embodiment, one of the key features of the biaxially oriented film may lie in that it can maintain an appropriate range of strength, for example, tensile strength, while maintaining softness characteristics due to increased flexibility. In such a case, the biaxially oriented film may be advantageous in expanding various applications by virtue of its excellent moldability.

The molding index (FI) of the biaxially oriented film may be, for example, 65 or more, 68 or more, 70 or more, 75 or more, 80 or more, 85 or more, 90 or more, 95 or more, or 100 or more. Specifically, the molding index (FI) of the biaxially oriented film may be, for example, 65 to 120, for example, 65 to 110, or, for example, 65 to 105. If the molding index (FI) of the biaxially oriented film is less than 65, the flexibility is lowered, so that it may break, or the strength is lowered, thereby causing various problems during processing or molding, or there may be limitations to various applications. Molded articles such as packaging materials to which the biaxially oriented film has been applied may be deteriorated in quality or have defects.

The molding index (FI) of the biaxially oriented film may be the same or different depending on the longitudinal direction (MD) and the transverse direction (TD) of the biaxially oriented film.

Specifically, the molding index ($FI_{MD}$) of the biaxially oriented film in the longitudinal direction (MD) may be, for example, 65 to 90, for example, 70 to 90, or, for example, 70 to 80.

The molding index ($FI_{TD}$) of the biaxially oriented film in the transverse direction may be, for example, 80 to 110, for example, 85 to 110, or, for example, 90 to 110.

The biaxially oriented film may satisfy the $FI_{MD}$ only, the $FI_{TD}$ only, or both the $FI_{MD}$ and the $FI_{TD}$. In such a case, it is possible to enhance flexibility while maintaining a proper level of tensile strength in the biaxially oriented film according to an embodiment and to provide an environment-friendly packaging material with excellent quality.

In addition, in Equation 1-3, the loop stiffness (LS) of the biaxially oriented film is as defined above.

In addition, the tensile strength of the biaxially oriented film may be measured using a universal testing machine (UTM, model name 5966) of INSTRON in which a biaxially oriented film specimen is prepared to have a length of 100

mm and a width of 15 mm according to ASTM D882, it is mounted such that the length between the chucks is 50 mm, a test is performed at a tensile speed of 200 mm/minute at room temperature of 25°C, and it is calculated by the program built in the equipment.

The tensile strength may be, for example, 9 to 25 kgf/$mm^2$, for example, 9.5 to 22 kgf/$mm^2$, for example, 10 to 22 kgf/$mm^2$, for example, 12 to 20 kgf/$mm^2$, or, for example, 13 to 20 kgf/$mm^2$.

If the tensile strength satisfies the above range, it is possible to enhance the productivity, processability, and moldability of the biaxially oriented film at the same time.

In addition, the tensile strength (TS) of the biaxially oriented film may be the same or different depending on the longitudinal direction (MD) and the transverse direction (TD) of the biaxially oriented film.

Specifically, the tensile strength ($TS_{MD}$) of the biaxially oriented film in the longitudinal direction (MD) may be, for example, 9 to 25 kgf/$mm^2$, for example, 9.5 to 22 kgf/$mm^2$, for example, 10 to 22 kgf/$mm^2$, for example, 12 to 20 kgf/$mm^2$, or, for example, 13 to 18 kgf/$mm^2$.

The tensile strength ($TS_{TD}$) of the biaxially oriented film in the transverse direction (TD) may be, for example, 9 to 25 kgf/$mm^2$, for example, 10 to 25 kgf/$mm^2$, for example, 11 to 23 kgf/$mm^2$, for example, 12 to 23 kgf/$mm^2$, or, for example, 15 to 20 kgf/$mm^2$.

The biaxially oriented film may satisfy the $TS_{MD}$ only, the $TS_{TD}$ only, or both the $TS_{MD}$ and the $TS_{TD}$. In such a case, it is possible to control the molding index (FI) of the biaxially oriented film according to an embodiment as represented by Equation 1-3 to the above range; thus, it is possible to enhance the productivity, processability, and moldability at the same time and to provide an environment-friendly packaging material with excellent quality.

Meanwhile, the biaxially oriented film may have a modulus of 200 kgf/$mm^2$ to 380 kgf/$mm^2$, 200 kgf/$mm^2$ to 360 kgf/$mm^2$, 200 kgf/$mm^2$ to 350 kgf/$mm^2$, 250 kgf/$mm^2$ to 350 kgf/$mm^2$, or 260 kgf/$mm^2$ to 350 kgf/$mm^2$, in a strain-stress curve. If the modulus is less than 200 kgf/$mm^2$, the resistance to mechanical tension is not sufficient in the processing steps such as printing or laminating, which may cause wrinkles in the sliding direction, resulting in printing problems, or breakage may undesirably take place during sliding. On the other hand, if the modulus exceeds 380 kgf/$mm^2$, the stiffness of the film is increased, so that it may be easily fractured or broken by an external impact. In addition, the lower the modulus within the above range, the better the flexibility.

Meanwhile, the biaxially oriented film may have a thickness deviation of 10 μm or less relative to the thickness of the entire width of the film. Specifically, the thickness deviation of the biaxially oriented film may be 9 μm or less, 8.5 μm or less, 8 μm or less, 7 μm or less, 6.5 μm or less, or 5 μm or less, relative to the thickness of the entire width of the film.

If the biaxially oriented film according to an embodiment comprises an amorphous polyhydroxyalkanoate (PHA), it is possible to provide a biaxially oriented film having excellent stretching uniformity and a small thickness variation.

Meanwhile, the biaxially oriented film may be excellent in optical properties.

Specifically, the biaxially oriented film may have a haze of 10% or less, 9% or less, 8% or less, 7% or less, 6% or less, or 5% or less. If the haze exceeds the above range, the transparency of the film is significantly reduced; thus, there may be limitations in use for packaging purposes in which the contents inside are to be visible.

If the biaxially oriented film according to an embodiment comprises an amorphous polyhydroxyalkanoate (PHA) in a specific amount, it is possible to provide a transparent biaxially oriented film having low haze.

In addition, the biaxially oriented film may have a light transmittance of 90% or more, 92% or more, or 93% or more.

Further, the biaxially oriented film is characterized in that the biodegradability is 90% or more when measured according to KS M3100-1 as the amount of carbon dioxide generated. Biodegradability refers to the ratio of degradation relative to the standard material (e.g., cellulose) in the same period of time. The Ministry of Environment of the Republic of Korea stipulates that a substance is biodegradable when its biodegradability is 90% or more relative to the standard material.

The structure and physical properties of the biaxially oriented film according to an embodiment can be efficiently achieved as it is prepared through the process for preparing a biaxially oriented film according to an embodiment.

Hereinafter, the process for preparing a biaxially oriented film will be described in detail.

[Process for preparing a biaxially oriented film]

The process for preparing a biaxially oriented film comprises a first step of mixing polylactic acid (PLA) and polyhydroxyalkanoate (PHA) and melt-extruding it to obtain a sheet; a second step of biaxially stretching the melt-extruded sheet to prepare a film; and a third step of heat-setting the biaxially oriented film.

Specifically, the first step may comprise mixing polylactic acid (PLA) and polyhydroxyalkanoate (PHA) and melt-extruding it to obtain a sheet.

The content or mixing weight ratio of the polylactic acid (PLA) and the polyhydroxyalkanoate (PHA) is as described above.

In addition, a filler may be further added during the mixing to enhance slip properties and quality.

The type, content, and particle size of the filler are as described above.

The melt-extrusion may be carried out at 180°C to 250°C. Upon the melt-extrusion, the extrudate may come into close contact with a cooling roll cooled to about 10°C to 30°C to obtain a sheet.

The second step may comprise biaxially stretching the melt-extruded sheet to prepare a film.

The melt-extruded sheet may be preheated to 50°C to 80°C and then longitudinally stretched 2 to 4 times in the longitudinal direction (MD) at 40°C to 100°C.

For example, the melt-extruded sheet may be preheated to 50°C to 80°C and then longitudinally stretched 2 to 4 times as it passes through a roll in the stretching section at 70°C to 100°C.

The stretched film may be transversely stretched 3 to 5 times in the transverse direction (MD) at 50°C to 110°C.

For example, the stretched film may be transversely stretched 3 to 5 times in the sections of a tenter that is divided into a first zone having an average temperature of 80°C to 105°C in the front 30% zone and a second zone having an average temperature of 80°C to 110°C in the rear 70% zone.

According to an embodiment, as a biaxially oriented film stretched in both directions is provided, the physical properties and moldability of the film are further enhanced, thereby achieving a high-quality packaging material.

In the case of a uniaxially oriented film stretched in one of the longitudinal and transverse directions, the thickness deviation of the film is severe, the strength in the direction without stretching may be significantly deteriorated, and thermal properties may also be deteriorated.

The third step may comprise heat-setting the biaxially oriented film.

The heat-setting step may be carried out at 50°C to 150°C, 70°C to 150°C, 100°C to 150°C, or 120°C to 150°C.

If the biaxially oriented film is prepared according to the preparation process of an embodiment, it may be more effective for preparing a biaxially oriented film having a desired configuration and physical properties.

**[Laminate]**

In an embodiment, there is provided a laminate, which comprises a first layer comprising a first polylactic acid (PLA) and polyhydroxyalkanoate (PHA); and a second layer disposed on one side of the first layer and comprising a second polylactic acid (PLA), wherein the first layer comprises greater than 0% to less than 30% by weight of the polyhydroxyalkanoate (PHA) based on the total weight of the first layer.

In an embodiment, as it comprises a first layer and a second layer having specific compositions, specifically, a first layer comprising a first polylactic acid (PLA) and polyhydroxyalkanoate (PHA), and a second layer comprising a second polylactic acid (PLA) on one side of the first layer, it is possible to enhance flexibility and lower the noise level, to maintain excellent interlayer adhesion characteristics owing to good interlayer compatibility between the first layer and the second layer, and to further enhance processability and productivity.

In particular, as the first layer comprises polyhydroxyalkanoate (PHA) in an amount of greater than 0% to less than 30% by weight based on the total weight of the first layer, it is possible to enhance flexibility while maintaining a proper level of strength, to further enhance optical properties, and to provide a laminate having a low heat shrinkage rate at high temperatures of 100°C or higher and a low thickness variation.

Further, since the laminate is biodegradable and completely decomposed when buried to have environmentally friendly characteristics, it can be used in various fields to provide excellent characteristics, which is one of the technical features.

Referring to Fig. 1, the laminate (1) according to an embodiment of the present invention comprises a first layer (12); and a second layer (11) disposed on one side of the first layer (12).

The laminate according to another embodiment of the present invention may comprise a first layer; a second layer disposed on one side of the first layer; and a corona layer, a coating layer, or both disposed on the other side of the first layer.

Specifically, referring to Fig. 2, the laminate (1) may comprise a first layer (12); a second layer (11) disposed on the upper side of the first layer (12); and a corona layer (13) disposed on the lower side of the first layer (12). In such an event, a coating layer may be disposed instead of the corona layer disposed on the lower side of the first layer (12).

In addition, referring to Fig. 3, the laminate (1) may comprise a first layer (12); a second layer (11) disposed on the upper side of the first layer (12); a corona layer (13) disposed on the lower side of the first layer (12); and a coating layer (14) disposed on the lower side of the corona layer (13).

Hereinafter, each layer of the laminate according to an embodiment will be described in detail.

**First layer**

According to an embodiment, the first layer comprises a first polylactic acid (PLA) and polyhydroxyalkanoate (PHA).

The first polylactic acid (PLA) may be the same as the polylactic acid (PLA) described in the biaxially oriented film.

As the first layer comprises a first polylactic acid (PLA) and polyhydroxyalkanoate (PHA), it is possible to enhance flexibility and lower the noise level, to maintain excellent interlayer adhesion characteristics owing to good interlayer compatibility with the second layer comprising a second polylactic acid (PLA), and to further enhance processability and productivity.

If the first layer comprises only one resin of the first polylactic acid (PLA) and polyhydroxyalkanoate (PHA) or none of them, it is difficult to achieve a satisfactory noise reduction effect or flexibility, and the interlayer compatibility between the first layer and the second layer in the laminate is deteriorated, which may cause a deterioration in the interlayer adhesion characteristics or delamination from each other; thus, there may be a problem in that workability and productivity are adversely affected.

The first polylactic acid (PLA) may have a weight average molecular weight (Mw) of 100,000 to 1,000,000 g/mole, for example, 100,000 to 800,000 g/mole, 100,000 to 500,000 g/mole, or 100,000 to 300,000 g/mole. The weight average molecular weight (Mw) may be measured by gel permeation chromatography (GPC). If the weight average molecular weight (Mw) of the first polylactic acid (PLA) is within the above range, the mechanical strength and thermal resistance of the laminate may be further enhanced.

The first polylactic acid (PLA) may comprise L-lactic acid, D-lactic acid, D,L-lactic acid, or a combination thereof. Specifically, the first polylactic acid (PLA) may be a random copolymer of L-lactic acid and D-lactic acid. In such an event, the content of L-lactic acid may be 80% by weight to 99% by weight, 83% by weight to 99% by weight, or 85% by weight to 99% by weight, based on the total weight of the first polylactic acid.

The first polylactic acid (PLA) may have a melting temperature (Tm) of 100°C to 250°C, 110°C to 220°C, or 120°C to 200°C.

The first polylactic acid (PLA) may have a glass transition temperature (Tg) of 30°C to 80°C, 40°C to 80°C, 40°C to 70°C, or 45°C to 65°C.

The first polylactic acid (PLA) may be employed in an amount of greater than 70% by weight, 75% by weight or more, 80% by weight or more, 85% by weight or more, 88% by weight or more, 90% by weight or more, 93% by weight or more, or 95% by weight or more, based on the total weight of the first layer. In addition, the first polylactic acid (PLA) may be employed in an amount of less than 100% by weight, 99% by weight or less, 98% by weight or less, 97% by weight or less, or 95% by weight or less, based on the total weight of the first layer.

Specifically, the first polylactic acid (PLA) may be employed in an amount of greater than 70% by weight to less than 100% by weight, greater than 70% by weight to 99% by weight, 75% by weight to 99% by weight, 75% by weight to 98% by weight, 75% by weight to 97% by weight, 80% by weight to 97% by weight, 85% by weight to 97% by weight, 90% by weight to 97% by weight, 95% by weight to less than 100% by weight, 95% by weight to 97% by weight, or 90% by weight to 95% by weight, based on the total weight of the first layer.

If the content of the first polylactic acid (PLA) is too small, the tensile strength of the laminate may be decreased, its heat shrinkage rate may be increased, and such optical properties as transparency and light transmittance may be deteriorated. On the other hand, if the content of the first polylactic acid (PLA) is too large, brittleness may be increased, flexibility may be decreased, so that it may be readily broken, and there may be a problem of severe noise.

In particular, the first polylactic acid (PLA) is very brittle and has the characteristic that the film would be hard when the temperature range for use thereof is 20°C or lower; thus, when the film is impacted in winter, it tends to crack and break easily. If the temperature range for use thereof is 35°C or higher, the film tends to lose its elasticity to become soft and makes severe noise, so that its use is limited.

Thus, it is characterized in an embodiment in that polyhydroxyalkanoate (PHA) having excellent flexibility and a low noise level is mixed with the first polylactic acid (PLA).

In particular, the content of polyhydroxyalkanoate (PHA) contained in the first layer is important in order to achieve excellent strength and flexibility, enhanced optical properties and thermal properties, and an improved noise level of the laminate.

According to an embodiment, the first layer may comprise polyhydroxyalkanoate (PHA) in an amount of greater than 0% by weight to less than 30% by weight based on the total weight of the first layer.

Specifically, the first layer may comprise polyhydroxyalkanoate (PHA) in an amount of greater than 0% by weight to less than 30% by weight, greater than 0% by weight to less than 25% by weight, greater than 0% by weight to less than 20% by weight, 1% by weight to less than 30% by weight, 1% by weight to 25% by weight, 2% by weight to 25% by weight, 2% by weight to 20% by weight, 3% by weight to 25% by weight, 3% by weight to 20% by weight, 3% by weight to 15% by weight, 3% by weight to 10% by weight, greater than 0% by weight to 5% by weight, 3% by weight to 5% by weight, or 5% by weight to 10% by weight, based on the total weight of the first layer.

If the content of polyhydroxyalkanoate (PHA) is too large, tensile strength may be decreased, heat shrinkage rate and thickness deviation may be increased, extrusion processability is deteriorated, and optical properties may be deteriorated. On the other hand, if the content of polyhydroxyalkanoate (PHA) is too small, brittleness may be increased, flexibility may be decreased, so that it may be readily broken, and there may be a problem of increased noise.

According to an embodiment, the mixing weight ratio of the first polylactic acid (PLA) and polyhydroxyalkanoate

(PHA) may be greater than 70 to less than 100:greater than 0 to less than 30, for example, 80 to 97:3 to 20, for example, 80 to 95:5 to 20, for example, 90 to 97:3 to 10, for example, 90 to 95:5 to 10, or, for example, 95 to 97:3 to 5. If the mixing weight ratio of the first polylactic acid (PLA) and polyhydroxyalkanoate (PHA) satisfies the above range, flexibility may be enhanced while an appropriate level of strength is maintained, optical properties and thermal properties may be improved, and noise level may be lowered.

According to an embodiment, the polyhydroxyalkanoate (PHA) may be the same as the polyhydroxyalkanoate (PHA) described in the biaxially oriented film.

Specifically, the copolymerized polyhydroxyalkanoate (PHA) may be polyhydroxyalkanoate (PHA) having a controlled crystallinity.

For example, the copolymerized polyhydroxyalkanoate (PHA) comprises a copolymerized polyhydroxyalkanoate comprising at least one unit of the above Formula 1 and at least one unit of the above Formula 2, respectively, and it may be a copolymerized polyhydroxyalkanoate (PHA) with controlled crystallinity:
The polyhydroxyalkanoate (PHA) may be a polyester comprising the unit of Formula 1 and the unit of Formula 2 only as a polymerization unit. It comprises the unit of Formula 1 and the unit of Formula 2 as a polymerization unit and may further comprise other polymerization units in addition thereto. In addition, the unit of Formula 2 may be randomly repeated.

The polyhydroxyalkanoate (PHA) whose crystallinity has been adjusted may be one in which crystallinity and amorphousness are adjusted by increasing irregularities in its molecular structure. Specifically, it may be one in which the types of monomers, the ratio of monomers, or the type and/or content of isomers are adjusted.

According to an embodiment, the polyhydroxyalkanoate (PHA) is a copolymerized polyhydroxyalkanoate (PHA) comprising the unit of Formula 1 and the unit of Formula 2, wherein the content of the unit of Formula 2 may be 1% by weight or more, 3% by weight or more, 5% by weight or more, 10% by weight or more, and may be 60% by weight or less, 55% by weight, or 50% by weight or less, based on the total weight of the copolymerized polyhydroxyalkanoate (PHA).

For example, the polyhydroxyalkanoate (PHA) is a copolymerized polyhydroxyalkanoate (PHA) comprising the unit of Formula 1 and the unit of Formula 2, wherein the content of the unit of Formula 2 may be 1 to 60% by weight, 5 to 50% by weight, 10 to 60% by weight, 10 to 50% by weight, 15 to 60% by weight, 15 to 50% by weight, 20 to 60% by weight, 20 to 50% by weight, 25 to 60% by weight, 25 to 50% by weight, 30 to 60% by weight, 30 to 50% by weight, 35 to 60% by weight, 35 to 50% by weight, 40 to 60% by weight, 40 to 50% by weight, 45 to 60% by weight, 45 to 50% by weight, or 46 to 50% by weight.

According to an embodiment, the polyhydroxyalkanoate (PHA) may comprise isomers. For example, the polyhydroxyalkanoate (PHA) may comprise structural isomers, enantiomers, or geometric isomers. Specifically, the polyhydroxyalkanoate (PHA) may comprise structural isomers.

According to an embodiment, the copolymerized polyhydroxyalkanoate (PHA) may be an amorphous polyhydroxyalkanoate (PHA).

When the copolymerized polyhydroxyalkanoate (PHA) is an amorphous polyhydroxyalkanoate (PHA), there may be an effect of enhanced optical properties of the laminate as compared with the case where a crystalline polyhydroxyalkanoate (PHA) is used as the polyhydroxyalkanoate (PHA) and mixed with the first polylactic acid (PLA) to prepare a first layer.

When the copolymerized polyhydroxyalkanoate (PHA) is an amorphous polyhydroxyalkanoate (PHA), the amorphous polyhydroxyalkanoate (PHA) is a copolymerized polyhydroxyalkanoate (PHA) comprising the unit of Formula 1 and the unit of Formula 2, wherein the unit of Formula 2 may be employed in an amount of 15 to 60% by weight based on the total weight of the copolymerized polyhydroxyalkanoate (PHA).

As the content of the unit of Formula 2 is increased in the polyhydroxyalkanoate (PHA), its amorphousness may be increased. Thus, the content of the unit of Formula 2 in the amorphous polyhydroxyalkanoate (PHA) may be important in the first layer according to an embodiment.

For example, the amorphous polyhydroxyalkanoate (PHA) may comprise the unit of Formula 2 in an amount of 15 to 55% by weight, 15 to 50% by weight, 20 to 60% by weight, 20 to 50% by weight, 25 to 60% by weight, 25 to 50% by weight, 30 to 60% by weight, 30 to 50% by weight, 35 to 60% by weight, 35 to 50% by weight, 40 to 60% by weight, 40 to 50% by weight, 45 to 60% by weight, 45 to 50% by weight, or 46 to 50% by weight, based on the total weight of the copolymerized polyhydroxyalkanoate (PHA).

The first layer comprises the unit of Formula 2 in the above range; thus, when polyhydroxyalkanoate (PHA) is mixed with the first polylactic acid (PLA) and used, there is compatibility between the resins, resulting in an advantage in that the optical properties of the laminate can be further enhanced. If the unit of Formula 2 is less than 15% by weight in polyhydroxyalkanoate (PHA), compatibility between the resins may be deteriorated, which lowers transparency and light transmittance and lowers modulus and noise level.

According to an embodiment, the amorphous polyhydroxyalkanoate (PHA) is a copolymerized polyhydroxyalkanoate (PHA) comprising a 3-hydroxybutyrate (3-HB) unit and a 4-hydroxybutyrate (4-HB) unit, wherein the 4-hydroxybutyrate (4-HB) unit may be employed in an amount of 15 to 60% by weight based on the total weight of the copolymerized

polyhydroxyalkanoate (PHA).

As the content of the 4-hydroxybutyrate (4-HB) unit is increased in the polyhydroxyalkanoate (PHA), its amorphousness is increased. Thus, the content of the 4-hydroxybutyrate (4-HB) unit in the amorphous polyhydroxyalkanoate (PHA) may be important in the first layer according to an embodiment.

For example, the 4-hydroxybutyrate (4-HB) unit may be employed in an amount of, for example, 20 to 60% by weight, for example, 25 to 60% by weight, for example, 25 to 50% by weight, for example, 30 to 60% by weight, for example, 30 to 50% by weight, for example, 35 to 60% by weight, for example, 35 to 50% by weight, for example, 40 to 60% by weight, for example, 40 to 50% by weight, for example, 45 to 60% by weight, for example, 45 to 50% by weight, for example, 46 to 60% by weight, or, for example, 46 to 50% by weight, based on the total weight of the copolymerized polyhydroxyalkanoate (PHA).

The first layer comprises the 4-hydroxybutyrate (4-HB) unit in the above range; thus, when polyhydroxyalkanoate (PHA) is mixed with the first polylactic acid (PLA) and used, there is compatibility between the resins, resulting in an advantage in that the optical properties of the laminate can be further enhanced. If the content of the 4-hydroxybutyrate (4-HB) unit is less than 15% by weight, compatibility between the resins may be deteriorated, which lowers the optical properties of the laminate.

The polyhydroxyalkanoate (PHA) may be a polyester comprising a 3-hydroxybutyrate unit (3-HB) and a 4-hydroxybutyrate (4-HB) unit only as a polymerized unit (i.e., the polymerization unit is composed of a 3-hydroxybutyrate unit (3-HB) and a 4-hydroxybutyrate unit (4-HB) only). Alternatively, it may comprise a 3-hydroxybutyrate unit (3-HB) and a 4-hydroxybutyrate (4-HB) unit as a polymerization unit and further comprise other polymerization units in addition thereto. In addition, the 4-hydroxybutyrate (4-HB) unit may be randomly repeated.

Examples of the other polymerization units include lactate (LA), glycolate (GA), 3-hydroxypropionate (3HP), 3-hydroxyvalerate (3HV), 5-hydroxyvalerate (5HV), 5-hydroxyhexanoate (5HH), 6-hydroxyhexanoate (6HH), 3-hydroxyhexanoate (3HH), and hydroxyalkanoates having 7 or more carbon atoms.

The polyhydroxyalkanoate (PHA) has a weight average molecular weight (Mw) and a glass transition temperature (Tg) as described above.

According to an embodiment, the first layer may further comprise a filler.

The filler may comprise an organic filler, an inorganic filler, or a mixture thereof.

The organic filler may comprise an organic filler comprising a material selected from hard acrylate, polystyrene, nylon, and soft acrylate.

The inorganic filler may be at least one selected from the group consisting of barium sulfate, silica, and calcium carbonate.

The filler may be an inorganic filler and may comprise, for example, silica.

As the first layer comprises the filler, its processability may be enhanced owing to excellent slip properties, thereby providing excellent quality.

In addition, the filler may have a particle diameter of 0.1 μm to 6.0 μm. For example, the particle diameter of the filler may be 1.0 μm to 5.5 μm or 2.0 to 5.2 μm.

The first layer may comprise the filler in an amount of 0.01 to 3% by weight based on the total weight of the first layer. For example, the first layer may comprise the filler in an amount of 0.01 to 2.5% by weight, 0.01 to 2% by weight, 0.01 to 1.5% by weight, 0.01 to 1% by weight, 0.01 to 0.5% by weight, or 0.01 to 0.2% by weight, based on the total weight of the first layer.

The first layer may have a thickness of, for example, 1 μm to 20 μm, for example, 2 μm to 19 μm, or, for example, 3 μm to 17 μm.

## Second layer

According to an embodiment, the second layer is disposed on one side of the first layer and comprises a second polylactic acid (PLA).

As the second layer comprises a second polylactic acid (PLA), it is possible to maintain excellent interlayer adhesion characteristics owing to good interlayer compatibility with the first layer comprising a first polylactic acid (PLA) and polyhydroxyalkanoate (PHA) and to further enhance processability and productivity.

If the second layer does not comprise the second polylactic acid (PLA) and comprises other resins such as polytriethylene terephthalate (PTT) or the like, the interlayer compatibility between the first layer and the second layer is deteriorated, which may cause a deterioration in the interlayer adhesion characteristics or delamination from each other; thus, there may be a problem in that workability and productivity are adversely affected.

The second layer may comprise an isomer of the second polylactic acid.

The second layer may comprise an L-isomer, a D-isomer, a D, L-isomer, or a mixture thereof of the second polylactic acid. For example, the second polylactic acid (PLA) may be a random copolymer of L-lactic acid and D-lactic acid.

Specifically, the second polylactic acid may comprise stereoisomers of an L-isomer and a D-isomer having opposite configurations. These stereoisomers have the same chemical structure and physical properties, whereas their configurations may be mirror images of each other.

If the second layer comprises a mixture of an L-isomer and a D-isomer of the second polylactic acid, the transparency of the film is enhanced, and the film has thermal adhesion performance to be used for thermal adhesion.

According to an embodiment, the second layer may comprise a D-isomer in an amount of 5% by weight to 30% by weight based on the total weight of the second polylactic acid. If the content of the D-isomer is too large, the thickness deviation and heat shrinkage rate of the laminate may be increased, and the physical properties of the laminate, such as tensile strength, may be decreased. Further, the windability during production and processing in the process is insufficient, which may cause a problem in the roll pass with lower workability and productivity. On the other hand, if the content of the D-isomer is too small, a large amount of heat is required during the thermal adhesion step. Further, when the laminate is formed into a film, the shape of the laminate may be deformed, for example, the film wrinkles.

According to an embodiment, the second layer comprises a mixture of an L-isomer and a D-isomer of the second polylactic acid, wherein the weight ratio of the L-isomer to the D-isomer may be 70 to 95:5 to 30.

For example, the second layer may comprise poly-L-lactic acid (L-PLA) and poly-D-lactic acid (D-PLA). In such an event, the weight ratio of the L-PLA to the D-PLA (L-PLA:D-PLA) may be 70 to 95:5 to 30, for example, 72 to 95:5 to 28, for example, 74 to 93:7 to 26, or, for example, 75 to 93:7 to 25.

If the weight ratio of the L-isomer to the D-isomer satisfies the above range, optical properties of the film may be enhanced, and thermal adhesion performance may be further enhanced. In addition, it is possible to lower the thickness variation and heat shrinkage rate of the laminate, to enhance such physical properties as tensile strength and modulus, and to further enhance processability and productivity.

The second polylactic acid (PLA) may have a weight average molecular weight (Mw) of, for example, 50,000 to 1,000,000 g/mole, for example, 50,000 to 800,000 g/mole, for example, 50,000 to 500,000 g/mole, or, for example, 50,000 to 300,000 g/mole. The weight average molecular weight (Mw) may be measured by gel permeation chromatography (GPC). If the weight average molecular weight (Mw) of the second polylactic acid (PLA) is within the above range, the mechanical strength and thermal resistance of the laminate may be further enhanced.

The second polylactic acid (PLA) may have a melting temperature (Tm) of, for example, 100°C to 250°C, 110°C to 220°C, or 120°C to 200°C. In addition, the second polylactic acid (PLA) may have no melting temperature (Tm).

The second polylactic acid (PLA) may have a glass transition temperature (Tg) of 20°C to 80°C, 25°C to 80°C, 30°C to 75°C, or 35°C to 70°C.

Meanwhile, the second layer may further comprise a filler to enhance slip properties.

The filler may be the same as, or different from, the filler in the first layer in terms of type and content.

Specifically, the filler contained in the second layer may have a particle diameter of 0.1 μm to 6.0 μm.

In addition, the second layer may comprise the filler in an amount of 0.01 to 3% by weight based on the total weight of the second layer.

If the second layer comprises a filler, slip properties are enhanced in the process, which makes its processing easier.

The second layer may have a thickness of, for example, 0.1 μm to 20 μm, for example, 0.1 μm to 18 μm, or, for example, 0.1 μm to 16 μm.

Meanwhile, the thickness ratio of the first layer to the second layer may be, for example, 1:0.1 to 1, for example, 1:0.1 to 0.9, or, for example, 1:0.1 to 0.8.

## Corona layer

The laminate according to an embodiment may further comprise a corona layer disposed on the other side of the first layer. Specifically, the corona layer may be directly formed on the other side of the first layer.

As the laminate further comprises a corona layer, it is possible to remove contamination such as oil on the surface of the laminate, to impart to the surface affinity with an adhesion site, thereby increasing adhesive strength, and to chemically and physically modify the surface, thereby further enhancing hydrophilicity, adhesion, printability, coating properties, deposition properties, and the like.

Specifically, since the first layer of the laminate has no polar group, its polarity is very low. Since its crystallinity is high, affinity to ink or an adhesive may be low. To address this, high frequency and high voltage are applied to the surface of the first layer to break down the molecular bonds on the surface to form polar groups on the surface, thereby increasing surface energy.

The corona layer is formed by corona treatment of the first layer, and it may comprise a polar functional group selected from the group consisting of -CO, -COOH, and -OH.

The surface tension of the corona-treated side of the first layer may be 38 dyn/cm or more, for example, 38 to 70 dyn/cm, for example, 38 to 68 dyn/cm, or, for example, 38 to 66 dyn/cm. If the surface tension of the corona-treated

side of the first layer satisfies the above range, adhesion, printability, coating properties, deposition properties, and the like of the laminate may be further enhanced.

The thickness of the corona layer may be appropriately adjusted according to the use and purpose of the laminate. Specifically, it may be, for example, 0.1 nm to 1,000 nm, for example, 0.2 nm to 900 nm, or, for example, 0.1 nm to 800 nm, but it is not limited thereto.

## Coating layer

The laminate according to an embodiment may further comprise a coating layer disposed on the other side of the first layer.

The coating layer may comprise a primer coating layer, in which case antistatic performance may be enhanced.

The laminate may comprise the primer corona layer on the other side of the first layer. Alternatively, when the laminate comprises a corona layer, it comprises the corona layer on the other side of the first layer, and it comprises the primer coating layer on the other side (lower side) of the corona layer.

Specifically, a primer coating layer may be formed by primer treatment of the other side of the first layer. Alternatively, a primer coating layer may be formed by primer treatment of the other side (lower side) of the corona layer disposed on the other side of the first layer.

The primer coating layer may comprise at least one selected from the group consisting of ammonium-based compounds, phosphoric acid-based compounds, and polymers such as acrylic resins and urethane-based resins, which have antistatic performance.

The surface resistance of the primer coating layer may be 0.1 to 30 Ω/□, 0.2 to 28 Ω/□, 0.3 to 26 Ω/□, 0.4 to 24 Ω/□, or 1 to 20 Ω/□.

The surface resistance is measured as antistatic performance using a surface resistance measuring instrument at, for example, room temperature (22 ± 2°C) and a relative humidity of 60% ± 10%.

The thickness of the coating layer may be appropriately adjusted according to the use and purpose of the laminate. Specifically, it may be 15 nm to 50 nm, 20 nm to 45 nm, 25 nm to 40 nm, or 30 nm to 35 nm, but it is not limited thereto.

The laminate of an embodiment of the present invention may comprise a multilayer structure of two or more layers, for example, three or more layers, for example, four or more layers.

## Physical properties of the laminate

In the laminate according to an embodiment, when the thickness of the laminate is 19 to 22 μm, the LSN as represented by the following Equation 2-1 may be 18 or less:

<Equation 2-1>

$$LSN = N_{AVG} \times LS$$

In Equation 2-1, $N_{AVG}$ is the average noise level (dB), exclusive of units, calculated by measuring the maximum noise level 5 times in which a sound level meter of Class 2 specified in KS C IEC61672-1 is directed to a noise source, and a laminate specimen with a width of 21 cm and a length of 29.5 cm is folded and unfolded 10 times for 10 seconds at a height of 1.2 to 1.5 m from the ground.

LS is the loop stiffness (gf), exclusive of units, measured as the load at the center of a loop in which a laminate specimen with a width of 1.5 cm and a length of 18 cm is fixed in a loop shape to a loop stiffness tester according to ASTM D747.

The LSN expressed by Equation 2-1 refers to the product of the average noise level and the loop stiffness of the laminate, which is an index indicating the degree of the composite characteristics of the flexibility and noise level of the laminate. Thus, LSN may be a measure indicating the quality of a molded article comprising the laminate.

The LSN may be lower as the average noise level ($N_{AVG}$) of the laminate is lower; and it may be higher as the average noise level ($N_{AVG}$) is higher. In addition, the LSN may be lower as the loop stiffness (LS) is lower; and it may be higher as the loop stiffness (LS) is higher.

When the LSN having the above characteristics satisfies the above range or less, the mechanical properties, optical properties, and thermal properties of the laminate may be excellent, and the noise level may be reduced.

Specifically, the LSN of the laminate may be, for example, 18 or less, 17 or less, 16 or less, or 15 or less. If the LSN of the laminate exceeds 18, flexibility may be decreased, brittleness may be increased, and noise may be increased. Thus, when it is applied to a packaging material, its quality may be deteriorated.

The LSN of the laminate may be the same or different depending on the longitudinal direction (MD) and the transverse direction (TD) of the laminate. Here, the longitudinal direction (MD) of the laminate may refer to the machine direction. The transverse direction (TD) of the laminate may refer to the width direction as a direction perpendicular to the longitudinal direction (MD).

Specifically, the $LSN_{MD}$ of the laminate in the longitudinal direction (MD) may be, for example, 4 to 18, 5 to 18, 5 to 17, 6 to 17, 8 to 17, or 8 to 16.

The $LSN_{MD}$ of the laminate in the transverse direction (TD) may be, for example, 4 to 18, 5 to 17, 5 to 16, 6 to 16, 8 to 15, or 9 to 15.

The laminate may satisfy the $LSN_{MD}$ only, the $LSN_{TD}$ only, or both the $LSN_{MD}$ and the $LSN_{TD}$. In such a case, it is possible to enhance flexibility while maintaining a proper level of tensile strength and to reduce the noise of the laminate according to an embodiment; thus, it is more advantageous for achieving the desired effect, and it may provide an environment-friendly packaging material with excellent quality.

Meanwhile, in Equation 2-1, the average noise level ($N_{AVG}$) of the laminate is defined as an average noise level calculated by measuring the maximum noise level 5 times in which a sound level meter of Class 2 or higher specified in KS C IEC61672-1 is directed to a noise source, and the laminate is folded and unfolded 10 times for 10 seconds at a height of 1.2 to 1.5 m from the ground. The noise level may be measured at a height of 1.2 to 1.5 m from the ground. If there is an obstacle exceeding 1.5 m in height at the measurement point, it may be measured at a point about 1.0 to 3.5 m away from the obstacle in the direction of the noise source.

To control the average noise level ($N_{AVG}$) in the laminate to a specific range or lower may be desired from the viewpoint of providing a high-quality packaging material.

Specifically, the average noise level ($N_{AVG}$) of the laminate may be, for example, 86 dB or less, for example, 85 dB or less, for example, 84.8 dB or less, or, for example, 84 dB or less.

If the average noise level ($N_{AVG}$) of the laminate is 86 dB or less, it is advantageous for controlling the LSN of Equation 2-1 to 18 or less, and it is possible to provide a high-quality packaging material by improving noise.

In addition, in Equation 2-1, the loop stiffness (LS) of the laminate is measured as the load at the center of a loop in which a laminate with a width of 1.5 cm and a length of 18 cm is fixed in a loop shape to a loop stiffness tester according to ASTM D747. It is an index indicating the degree of flexibility of the laminate.

The laminate may have a loop stiffness (LS) of 0.20 gf or less or 0.19 gf or less. Specifically, the loop stiffness (LS) of the laminate may be, for example, 0.10 to 0.20 gf, for example, 0.10 to 0.19 gf, for example, 0.10 to 0.18 gf, or, for example, 0.10 to 0.17 gf.

The lower the loop stiffness (LS) of the laminate, the greater the flexibility. The higher the loop stiffness (LS) of the laminate, the lower the flexibility.

In addition, the loop stiffness (LS) of the laminate may be the same or different depending on the longitudinal direction (MD) and the transverse direction (TD) of the laminate.

Specifically, the loop stiffness ($LS_{MD}$) of the laminate in the longitudinal direction may be, for example, 0.10 to 0.20 gf, for example, 0.10 to 0.19 gf, for example, 0.11 to 0.19 gf, for example, 0.11 to 0.18 gf, or, for example, 0.11 to 0.15 gf.

The loop stiffness ($LS_{TD}$) of the laminate in the transverse direction (TD) may be, for example, 0.10 to 0.20 gf, for example, 0.10 to 0.18 gf, for example, 0.10 to 0.17 gf, or, for example, 0.12 to 0.16 gf.

The laminate may satisfy the $LS_{MD}$ only, the $LS_{TD}$ only, or both the $LS_{MD}$ and the $LS_{TD}$. In such a case, in the laminate according to an embodiment, it is more effective to control the LSN of the laminate represented by Equation 1-1 to the above range; thus, it is more advantageous for achieving the desired effect, and it may provide an environment-friendly packaging material with excellent quality.

Meanwhile, the laminate may have a heat shrinkage rate ($S_{100}$) of 15% or less as represented by the following Equation 2-2:

<Equation 2-2>

$$\text{Heat shrinkage rate } (S_{100})\ (\%) = \frac{L_{25} - L_{100}}{L_{25}} \times 100$$

In Equation 2-2, $L_{25}$ is the initial length (mm) of the laminate specimen at 25°C, and $L_{100}$ is the length (mm) of the laminate specimen after it has been left for 5 minutes in a hot air oven at 100°C.

The heat shrinkage rate ($S_{100}$) represented by Equation 2-2 is a value obtained by converting the degree of heat shrinkage of a laminate specimen at a hot air temperature of 100°C into a percentage. It is a value calculated as a percentage of the change between the initial length of a laminate specimen and the length of the laminate specimen after it has been left in the hot air oven for 5 minutes relative to the initial length of the laminate specimen.

The heat shrinkage rate ($S_{100}$) may be calculated by cutting a laminate into 150 mm in length and 2 cm in width regardless of the direction to prepare a specimen and then measuring the initial length thereof at room temperature and the length of the laminate specimen after it has been left for 5 minutes in a hot air oven at 100°C.

The heat shrinkage rate ($S_{100}$) may be 15% or less, 12% or less, 10% or less, 9% or less, 8% or less, 7% or less, 6% or less, 5% or less, or 4.5% or less.

If the heat shrinkage rate ($S_{100}$) satisfies the above range, the degree of heat shrinkage is small at a hot air temperature of 100°C or higher, so that thermal properties may be enhanced, resulting in further improved printability and moldability.

In addition, the heat shrinkage rate ($S_{100}$) of the laminate may be the same or different depending on the longitudinal direction (MD) and the transverse direction (TD) of the laminate.

Specifically, the heat shrinkage rate ($S_{MD100}$) of the laminate in the longitudinal direction (MD) may be 15% or less, 12% or less, 10% or less, 9% or less, 8% or less, 7% or less, 6% or less, 5% or less, 4.7% or less, or 4.5% or less.

The heat shrinkage rate ($S_{TD100}$) of the laminate in the transverse direction may be, for example, 15% or less, 12% or less, 10% or less, 9% or less, 8% or less, 7% or less, 6% or less, 5.5% or less, or 5.0% or less.

If the heat shrinkage rates in the longitudinal direction (MD) and transverse direction (TD) of the laminate exceed the above ranges, the shrinkage in the longitudinal and transverse directions due to hot air is severe during printing or lamination, which causes a printing problem, and curling upon printing is severe, which is not preferable.

Meanwhile, the laminate according to an embodiment may have a molding index (FI) of 65 or more as represented by the following Equation 2-3:

<Equation 2-3>

$$\text{Molding index (FI)} = \frac{\text{TS}}{\text{LS}}$$

In Equation 2-3, TS is the tensile strength (kgf/mm2), exclusive of units, measured at room temperature for a specimen that has been cut to have a length of about 100 mm and a width of 15 mm according to ASTM D882 and mounted between the chucks of a universal testing machine (UTM) in a distance of 50 mm.

LS is as defined above.

The molding index (FI) of the laminate is a ratio of the tensile strength to the loop stiffness of the laminate and may stand for a measure of whether tensile strength and flexibility are appropriate.

That is, according to an embodiment, one of the key features of the laminate may lie in that it can maintain an appropriate range of strength, for example, tensile strength, while maintaining softness characteristics due to increased flexibility. In such a case, the laminate may be advantageous in expanding various applications by virtue of its excellent moldability.

The molding index (FI) of the laminate may be, for example, 65 or more, 68 or more, 70 or more, 73 or more, 75 or more, 80 or more, 85 or more, 88 or more, 90 or more, 95 or more, or 100 or more. Specifically, the molding index (FI) of the laminate may be, for example, 65 to 120, for example, 65 to 110, or, for example, 65 to 105. If the molding index (FI) of the laminate is less than 65, the flexibility is lowered, so that it may break, or the strength is lowered, thereby causing various problems during processing or molding, or there may be limitations to various applications. Molded articles such as packaging materials to which the laminate has been applied may be deteriorated in quality or have defects.

The molding index (FI) of the laminate may be the same or different depending on the longitudinal direction (MD) and the transverse direction (TD) of the laminate.

Specifically, the molding index ($FI_{MD}$) of the laminate in the longitudinal direction (MD) may be, for example, 65 to 120, for example, 65 to 100, for example, 65 to 90, or, for example, 70 to 90.

The molding index ($FI_{TD}$) of the laminate in the transverse direction (TD) may be, for example, 70 to 120, for example, 72 to 110, for example, 80 to 110, for example, 90 to 110, or, for example, 90 to 105.

The laminate may satisfy the $FI_{MD}$ only, the $FI_{TD}$ only, or both the $FI_{MD}$ and the $FI_{TD}$. In such a case, it is possible to enhance flexibility while maintaining a proper level of tensile strength in the laminate according to an embodiment and to provide an environment-friendly packaging material with excellent quality.

In addition, in Equation 2-3, the loop stiffness (LS) of the laminate is as defined above.

In addition, the tensile strength of the laminate may be measured using a universal testing machine (UTM, model name 5966) of INSTRON in which a laminate specimen is prepared to have a length of 100 mm and a width of 15 mm according to ASTM D882, it is mounted such that the length between the chucks is 50 mm, a test is performed at a tensile speed of 200 mm/minute at room temperature of 25°C, and it is calculated by the program built in the equipment.

The tensile strength may be, for example, 7 to 20 $kgf/mm^2$, for example, 8 to 20 $kgf/mm^2$, for example, 8 to 18 $kgf/mm^2$, for example, 9 to 17 $kgf/mm^2$, or, for example, 10 to 17 $kgf/mm^2$.

If the tensile strength satisfies the above range, it is possible to enhance the productivity, processability, and

moldability of the laminate at the same time.

In addition, the tensile strength (TS) of the laminate may be the same or different depending on the longitudinal direction (MD) and the transverse direction (TD) of the laminate.

Specifically, the tensile strength ($TS_{MD}$) of the laminate in the longitudinal direction (MD) may be, for example, 7 to 14 kgf/mm$^2$, for example, 8 to 14 kgf/mm$^2$, for example, 9 to 14 kgf/mm$^2$, for example, 10 to 14 kgf/mm$^2$, or, for example, 11 to 14 kgf/mm$^2$.

The tensile strength ($TS_{TD}$) of the laminate in the transverse direction (TD) may be, for example, 8 to 20 kgf/mm$^2$, for example, 10 to 20 kgf/mm$^2$, for example, 11 to 20 kgf/mm$^2$, for example, 12 to 18 kgf/mm$^2$, or, for example, 13 to 17 kgf/mm$^2$.

The laminate may satisfy the $TS_{MD}$ only, the $TS_{TD}$ only, or both the $TS_{MD}$ and the $TS_{TD}$. In such a case, it is possible to control the molding index (FI) of the laminate according to an embodiment as represented by Equation 1-3 to the above range; thus, it is possible to enhance the productivity, processability, and moldability at the same time and to provide an environment-friendly packaging material with excellent quality.

Meanwhile, the laminate may have a modulus of 200 kgf/mm$^2$ to 380 kgf/mm$^2$, 230 kgf/mm$^2$ to 380 kgf/mm$^2$, 250 kgf/mm$^2$ to 350 kgf/mm$^2$, 280 kgf/mm$^2$ to 350 kgf/mm$^2$, or 290 kgf/mm$^2$ to 350 kgf/mm$^2$, in a strain-stress curve. If the modulus is less than 200 kgf/mm$^2$, the resistance to mechanical tension is not sufficient in the processing steps such as printing or laminating, which may cause wrinkles in the sliding direction, resulting in printing problems, or breakage may undesirably take place during sliding. On the other hand, if the modulus exceeds 380 kgf/mm$^2$, the stiffness of the laminate is increased, so that it may be easily fractured or broken by an external impact. In addition, the lower the modulus within the above range, the better the flexibility.

In addition, the modulus of the laminate may be the same or different depending on the longitudinal direction (MD) and the transverse direction (TD) of the laminate.

Specifically, the modulus ($M_{MD}$) of the laminate in the longitudinal direction (MD) may be 200 kgf/mm$^2$ to 380 kgf/mm$^2$, 250 kgf/mm$^2$ to 380 kgf/mm$^2$, 260 kgf/mm$^2$ to 350 kgf/mm$^2$, 290 kgf/mm$^2$ to 350 kgf/mm$^2$, or 295 kgf/mm$^2$ to 345 kgf/mm$^2$.

Specifically, the modulus ($M_{TD}$) of the laminate in the transverse direction (MD) may be, for example, 200 kgf/mm$^2$ to 380 kgf/mm$^2$, 260 kgf/mm$^2$ to 380 kgf/mm$^2$, 270 kgf/mm$^2$ to 350 kgf/mm$^2$, 280 kgf/mm$^2$ to 350 kgf/mm$^2$, or 300 kgf/mm$^2$ to 350 kgf/mm$^2$.

In addition, the modulus ($M_{TD}$) of the laminate in the transverse direction (TD) may be greater than the modulus ($M_{MD}$) thereof in the longitudinal direction (MD).

Meanwhile, the laminate may have a thickness deviation of 10 μm or less relative to the thickness of the entire width of the laminate. Specifically, the thickness deviation of the laminate may be 9 μm or less, 8.5 μm or less, 8 μm or less, 7 μm or less, 6.5 μm or less, 5 μm or less, or 4.7 μm or less, relative to the thickness of the entire width of the laminate.

Meanwhile, the laminate has excellent interlayer adhesion characteristics between the first layer and the second layer.

Specifically, the thermal adhesive strength of the first layer and the second layer may be 0.7 to 2.0 kgf/mm$^2$. Specifically, the thermal adhesive strength of the first layer and the second layer may be 0.7 to 1.8 kgf/mm$^2$, 0.9 to 1.8 kgf/mm$^2$, or 0.9 to 1.7 kgf/mm$^2$.

If the thermal adhesive strength of the first layer and the second layer satisfies the above range, the interlayer adhesive characteristics are excellent, so that it is possible to prevent the delamination of the respective layers, and it is possible to further enhance processability and productivity.

The thermal adhesive strength may be measured by preparing a laminate specimen, for example, according to ASTM D882, cutting it to about 100 mm in length and about 15 mm in width, thermally laminating a first layer and a second layer facing each other in a heat seal tester (TP-701-B, TESTER SANGYO), mounting the laminate specimen in a universal testing machine (UTM, model name 5966) of INSTRON in which the thermally laminated part of the laminate specimen is positioned in the center and the length between chucks is 50 mm, and evaluating the strength when the first layer and the second layer are peeled off at a speed of about 200 mm/minute and an angle of 180° at room temperature of about 25°C. It is calculated by the program built in the equipment.

Meanwhile, the laminate may be excellent in optical properties.

Specifically, the laminate may have a haze of 10% or less, 9% or less, 8% or less, 7% or less, 6% or less, or 5% or less. If the haze exceeds the above range, the transparency of the laminate is significantly reduced; thus, there may be limitations in use for packaging purposes in which the contents inside are to be visible.

If the laminate according to an embodiment comprises an amorphous polyhydroxyalkanoate (PHA) in a specific amount, it is possible to provide a transparent laminate having low haze.

In addition, the laminate may have a light transmittance of 90% or more, 92% or more, or 93% or more.

Further, the laminate is characterized in that the biodegradability is 90% or more when measured according to KS M3100-1 as the amount of carbon dioxide generated. Biodegradability refers to the ratio of degradation relative to

the standard material (e.g., cellulose) in the same period of time. The Ministry of Environment of the Republic of Korea stipulates that a substance is biodegradable when its biodegradability is 90% or more relative to the standard material.

The structure and physical properties of the laminate according to an embodiment can be efficiently achieved as it is prepared through the process for preparing a laminate according to an embodiment.

Hereinafter, the process for preparing a laminate will be described in detail.

**[Process for preparing a laminate]**

According to an embodiment, there is provided a process for preparing a laminate, which comprises preparing a first resin comprising a first polylactic acid (PLA) and polyhydroxyalkanoate (PHA) and a second resin comprising a second polylactic acid (PLA) (step 1); melt-coextruding the first resin and the second resin to obtain a two-layer laminated sheet (step 2); and biaxially stretching and heat-setting the laminated sheet to obtain a laminate (step 3), wherein the laminate comprises a first layer comprising the first polylactic acid (PLA) and the polyhydroxyalkanoate (PHA); and a second layer disposed on one side of the first layer and comprising the second polylactic acid (PLA), and the first layer comprises greater than 0% by weight to less than 30% by weight of the polyhydroxyalkanoate (PHA) based on the total weight of the first layer.

In the process for preparing a laminate according to an embodiment of the present invention, a first resin and a second resin having specific compositions are melt-coextruded to obtain a two-layer laminated sheet, which is biaxially stretched and heat set, whereby processability and productivity can be further enhanced, and the desired physical properties can be achieved in an economical and efficient way.

Referring to Fig. 4, the process for preparing a laminate (S100) may comprise preparing a first resin comprising a first polylactic acid (PLA) and polyhydroxyalkanoate (PHA) and a second resin comprising a second polylactic acid (PLA) (S 110).

Specifically, the first resin comprises a first polylactic acid (PLA) and polyhydroxyalkanoate (PHA), in which the content or mixing weight ratio thereof is as described above.

In addition, when the first polylactic acid (PLA) and polyhydroxyalkanoate (PHA) are mixed, a filler may be further added to enhance slip properties and quality.

The type, content, and particle size of the filler are as described above.

Meanwhile, the second resin comprises a second polylactic acid (PLA). The second polylactic acid (PLA) is as described above.

The process for preparing a laminate (S 100) may comprise melt-coextruding the first resin and the second resin to obtain a two-layer laminated sheet (S120).

In the melt-coextrusion step, the extrusion temperature of the first resin and the second resin may be adjusted, respectively.

Specifically, the extrusion temperature of the first resin and the extrusion temperature of the second resin may be the same or different, and the difference between the extrusion temperature of the first resin and the extrusion temperature of the second resin may be 80°C or less. Specifically, the difference between the extrusion temperature of the first resin and the extrusion temperature of the second resin may be 60°C or less, 50°C or less, or 40°C or less.

For example, the extrusion temperature of the first resin may be, for example, 180°C to 250°C, the extrusion temperature of the second resin may be, for example, 180°C to 270°C. Upon the melt-extrusion, the extrudate may come into close contact with a cooling roll cooled to about 10°C to 40°C to obtain a two-layer laminated sheet.

Meanwhile, according to an embodiment, the process may further comprise drying the first resin and the second resin before the melt-coextrusion.

The drying step may be required or may be omitted depending on the type of extruder.

For example, if the extruder is a single extruder, upon the drying step, melt-coextrusion may be carried out. The drying step may be carried out, for example, at 40 to 130°C for 4 to 24 hours.

The process for preparing a laminate (S100) may comprise biaxially stretching and heat-setting the laminated sheet to obtain a laminate (S130).

Specifically, the two-layer laminated sheet may be biaxially stretched, in which the biaxial stretching step may comprise preheating it, for example, to 50°C to 80°C, stretching it 2 to 4 times in the longitudinal direction (MD) at 40°C to 100°C, and stretching it 3 to 5 times in the transverse direction (MD) at 50°C to 110°C.

As the two-layer laminated sheet is biaxially stretched in both directions, the physical properties and moldability of the laminate are further enhanced, thereby achieving a high-quality packaging material.

If it is stretched in one of the longitudinal and transverse directions, the thickness deviation of the laminate is severe, the strength in the direction without stretching may be deteriorated, and thermal properties may also be deteriorated.

In addition, the heat-setting step may be carried out at 50°C to 150°C, 70°C to 150°C, 100°C to 150°C, or 120°C to 150°C.

Meanwhile, the process for preparing a laminate (S100) may further comprise forming a corona layer, a coating layer, or both on the other side of the first layer.

Specifically, a corona layer may be formed by corona treatment of the first layer.

The corona treatment may be carried out by charging a high-frequency and high-voltage output between a discharge electrode and a treatment roll, which causes corona discharge, and passing the desired surface therethrough.

Specifically, the intensity of corona discharge may be, for example, 3 to 20 kW. If the intensity of corona discharge is less than the above range, the effect of corona discharge treatment may be insignificant. On the other hand, if the intensity of corona discharge exceeds the above range, surface damage may be caused by excessive surface modification.

The configuration and physical properties of the corona layer are as described above.

In addition, a coating layer may be formed on the other side of the first layer.

The coating layer may comprise a primer coating layer, in which the primer coating layer may form surface roughness on the other side of the first layer by primer treatment with a primer composition comprising at least one selected from the group consisting of ammonium-based compounds, phosphoric acid-based compounds, and polymers such as acrylic resins and urethane-based resins.

The laminate may comprise the primer corona layer on the other side of the first layer. Alternatively, when the laminate comprises a corona layer, the corona layer is formed on the other side of the first layer, and the primer coating layer may be formed on the other side of the corona layer.

In addition, the primer composition may comprise a curing agent component. Specific examples thereof include 4,4'-diaminodiphenylmethane (DDM), aromatic diamine, and mixtures thereof. Here, the amount of the curing agent component added may be 0.1 to 50% by weight based on the total weight of the primer composition.

A conventional method used in the art may be used as the primer treatment method. For example, a spray method, brushing, rolling, or the like may be used. Specifically, a primer composition may be sprayed using an airless spray onto the surface of the first layer under the conditions of an induction time of 1 to 30 minutes, a spraying pressure of 5 to 500 MPa, a nozzle diameter of 0.46 to 0.58 mm, and a spraying angle of 40 to 80°.

In addition, in order to increase the adhesiveness of the laminate, a surface treatment such as plasma treatment, ultraviolet irradiation treatment, frame treatment, or saponification treatment may be appropriately carried out.

If the laminate is prepared according to the preparation process of an embodiment, it may be more effective for preparing a laminate having a desired configuration and physical properties.

## Environment-friendly packaging material

In an embodiment, there is provided an environment-friendly packaging material, which comprises a biaxially oriented film, in which the biaxially oriented film comprises polylactic acid (PLA) and polyhydroxyalkanoate (PHA), wherein the amount of the polyhydroxyalkanoate (PHA) is greater than 0% by weight to less than 30% by weight based on the total weight of the biaxially oriented film, and when the thickness of the film is 19 to 21 μm, the LSN as represented by the above Equation 1-1 is 20 or less:

In another embodiment, there is provided an environment-friendly packaging material, which comprises a laminate, wherein the laminate comprises a first layer comprising a first polylactic acid (PLA) and polyhydroxyalkanoate (PHA); and a second layer disposed on one side of the first layer and comprising a second polylactic acid (PLA), wherein the first layer comprises greater than 0% by weight to less than 30% by weight of the polyhydroxyalkanoate (PHA) based on the total weight of the first layer.

The environment-friendly packaging material may be in the form of a film that can be used, for example, as a general disposable packaging material and food packaging material, a fiber that can be used as a fabric, knitted fabric, non-woven fabric, and rope, and a container that can be used as a container for food packaging such as lunch boxes.

The environment-friendly packaging material comprises a laminate with excellent strength and flexibility at the same time, excellent optical properties such as transparency and thermal properties, and a low noise level; thus, it is possible to provide excellent physical properties and quality. In addition, since it is possible to provide a packaging material that is biodegradable and completely decomposed when buried to have environmentally friendly characteristics, it can be used in various fields as packaging materials to provide excellent characteristics.

## Embodiments for Carrying Out the Invention

Hereinafter, the present invention will be described in detail with reference to Examples. But the following examples are intended to illustrate the present invention, and the scope of the present invention is not limited thereto only.

**<Example>**

**Preparation of a biaxially oriented film**

**Example 1-1**

A polylactic acid (PLA) resin (NatureWorks LLC, USA), as a random copolymer of L-lactic acid and D-lactic acid (a content of L-lactic acid of 98% by weight), having a weight average molecular weight of 150,000 g/mole, a melting temperature (Tm) of 170°C, and a glass transition temperature (Tg) of 58°C; an amorphous polyhydroxyalkanoate (PHA) resin having a glass transition temperature (Tg) of -30°C (CJ Corporation, Korea); and silica (Fuji Silysia Chemical, 3.9 μm) were mixed to prepare a mixed resin. Here, the mixing of the polylactic acid (PLA) and the amorphous polyhydroxyalkanoate (PHA) was carried out such that the weight ratio of the polylactic acid (PLA) to the amorphous polyhydroxyalkanoate (PHA) in the final film was 97:3, as shown in Table 1 below. The content of silica was 0.1% by weight based on the total weight of the biaxially oriented film.

The mixed resin was melt-extruded through an extruder at a temperature of 220°C and then came into close contact with a cooling roll cooled to 20°C to obtain a sheet.

The sheet thus obtained was immediately preheated to 55°C and then stretched three times in the longitudinal direction (MD) as it passed through a roll in the stretching section at 70°C. The stretched film was stretched 4 times in the transverse direction (TD) in the stretching section of a tenter divided into 2 zones, in which the average temperature of the front 30% zone was 85°C and the average temperature of the rear 70% zone was 100°C.

Then, the stretched sheet was heat-set at 150°C in the thermal treatment section of the tenter to prepare a biaxially oriented film having a thickness of 19.98 μm.

**Example 1-2**

A biaxially oriented film was prepared in the same manner as in Example 1-1, except that the polylactic acid (PLA) and the amorphous polyhydroxyalkanoate (PHA) were mixed such that their ratio in the final biaxially oriented film was 95:5, as shown in Table 1 below.

**Example 1-3**

A biaxially oriented film was prepared in the same manner as in Example 1-1, except that the polylactic acid (PLA) and the amorphous polyhydroxyalkanoate (PHA) were mixed such that their ratio in the final biaxially oriented film was 90: 10, as shown in Table 1 below.

**Example 1-4**

A biaxially oriented film was prepared in the same manner as in Example 1-1, except that the polylactic acid (PLA) and the amorphous polyhydroxyalkanoate (PHA) were mixed such that their ratio in the final biaxially oriented film was 80:20, as shown in Table 1 below.

**Example 1-5**

A biaxially oriented film was prepared in the same manner as in Example 1-3, except that a crystalline polyhydroxyalkanoate (PHA) resin (CJ Corporation, Korea) was used instead of the amorphous polyhydroxyalkanoate (PHA).

**Comparative Example 1-1**

A biaxially oriented film was prepared in the same manner as in Example 1-1, except that the polylactic acid (PLA) resin only was used as shown in Table 1 below.

**Comparative Example 1-2**

A biaxially oriented film was prepared in the same manner as in Example 1-1, except that the polylactic acid (PLA) resin and the amorphous polyhydroxyalkanoate (PHA) resin were mixed such that their ratio in the biaxially oriented film was 70:30, as shown in Table 1 below.

**Comparative Example 1-3**

The same mixed resin of polylactic acid (PLA) and amorphous polyhydroxyalkanoate (PHA) as in Example 1-3 was melt-extruded through an extruder at a temperature of 220°C and then came into close contact with a cooling roll cooled to 20°C to obtain a sheet. It was stretched three times in the longitudinal direction (MD), and the stretched sheet was heat-set at 150°C in the thermal treatment section of a tenter to prepare a uniaxially oriented film.

[Table 1]

| Film composition | Example | | | | | Comparative Example | | |
|---|---|---|---|---|---|---|---|---|
| | 1-1 | 1-2 | 1-3 | 1-4 | 1-5 | 1-1 | 1-2 | 1-3 |
| PHA | Amorphous | Amorphous | Amorphous | Amorphous | Crystalline | - | Amorphous | Amorphous |
| PLA:PHA (weight ratio) | 97:3 | 95:5 | 90:10 | 80:20 | 90:10 | 100:0 | 70:30 | 90:10 |
| Filler (silica) (% by weight) | 0.1 | 0.1 | 0.1 | 0.1 | 0.1 | 0.1 | 0.1 | 0.1 |
| Stretching | Biaxial stretching | | | | | Biaxial stretching | Biaxial stretching | Uniaxial stretching |

## Preparation of a laminate

### Example 2-1

### Step 1: Preparation of a first resin and a second resin

First resin

A first polylactic acid (PLA) resin (4032D, NatureWorks LLC), as a random copolymer of L-lactic acid and D-lactic acid (a content of L-lactic acid of 98% by weight), having a weight average molecular weight of 190,000 g/mole, a melting temperature (Tm) of about 160°C, and a glass transition temperature (Tg) of about 58°C; an amorphous polyhydroxyalkanoate (PHA) resin having a glass transition temperature (Tg) of about -30°C (CJ Corporation, Korea); and silica (Fuji Silysia Chemical, 3.9 μm) were mixed to prepare a mixed resin. Here, the mixing of the first polylactic acid (PLA) and the amorphous polyhydroxyalkanoate (PHA) was carried out such that the weight ratio of the first polylactic acid (PLA) to the amorphous polyhydroxyalkanoate (PHA) in the first layer was about 97:3, as shown in Table 2 below. The content of silica was about 500 ppm based on the total weight of the first layer.

Second resin

A second polylactic acid (PLA) resin (4060D, NatureWorks LLC), as a random copolymer of L-lactic acid and D-lactic acid, having a glass transition temperature (Tg) of about 52°C was prepared. Here, the mixing of the L-lactic acid and the D-lactic acid was carried out such that the weight ratio of poly-L-lactic acid (L-PLA) and poly-D-lactic acid (D-PLA) in the final second layer was about 90:10, as shown in Table 2 below.

### Step 2: Melt-coextrusion to obtain a two-layer laminated sheet

The first resin and the second resin obtained in step 1 were dried in a dehumidifying dryer at about 50°C for about 5 hours to remove moisture, respectively. They were then melt-coextruded through a single extruder to obtain a two-layer laminated sheet. Here, the extrusion temperature of the first resin was about 210°C, and the extrusion temperature of the second resin was about 220°C.

### Step 3: Biaxial stretching and heat-setting to obtain a laminate

The laminated sheet obtained in step 2 was stretched about 3 times in the longitudinal direction (MD) at about 75°C and stretched about 3.8 times in the transverse direction (TD) at about 85°C, heat-set at about 140°C, and relaxed by about 2% to prepare a laminate having a thickness of about 19.98 μm.

### Examples 2-2 to 2-4 and 2-6

Laminates were each prepared in the same manner as in Example 2-1, except that the composition of the final first layer and the second layer in step 1 of Example 2-1 was changed as shown in Table 2 below.

### Examples 2-5

A biaxially oriented film was prepared in the same manner as in Example 2-3, except that a crystalline polyhydroxyalkanoate (PHA) resin (CJ Corporation, Korea) was used instead of the amorphous polyhydroxyalkanoate (PHA) in step 1 of Example 2-3, and the composition of the final second layer was changed, as shown in Table 2 below.

### Comparative Example 2-1

A laminate was prepared in the same manner as in Example 2-1, except that the first polylactic acid (PLA) resin only was used as a component of the first layer in step 1 of Example 2-1 as shown in Table 2 below.

### Comparative Example 2-2

A laminate was prepared in the same manner as in Example 2-1, except that the composition of the final first layer and the second layer in step 1 of Example 2-1 was changed as shown in Table 2 below.

**Comparative Example 2-3**

A laminate was prepared in the same manner as in Example 2-1, except that polytriethylene terephthalate (PTT) was used for the second layer in step 1 of Example 2-1 instead of the random copolymer of L-lactic acid and D-lactic acid as shown in Table 2 below.

[Table 2]

| Laminate | | Example | | | | | | Comparative Example | | |
|---|---|---|---|---|---|---|---|---|---|---|
| | | 2-1 | 2-2 | 2-3 | 2-4 | 2-5 | 2-6 | 2-1 | 2-2 | 2-3 |
| First layer | PHA | Amorphous | Amorphous | Amorphous | Amorphous | Crystalline | Amorphous | - | Amorphous | Amorphous |
| | PLA:PHA (weight ratio) | 97:3 | 95:5 | 90:10 | 80:20 | 90:10 | 90:10 | 100:0 | 70:30 | 90:10 |
| | Filler (silica) (based on weight) | 500 ppm | | | | | | | | |
| Second layer | L-PLA:D-PLA (weight ratio) | 90:10 | 81:19 | 75:25 | 93:7 | 85:15 | 62:38 | 90:10 | 85:15 | PTT |
| Laminate | Thickness TD (μm) | 19.98 | 20.97 | 21.02 | 20.52 | 20.12 | 20.33 | 19.73 | 20 | Delamination during stretching |
| | Thickness deviation (μm) | 4.56 | 2.82 | 2.19 | 4.68 | 2.01 | 7.6 | 5.65 | 10.1 | |

**Evaluation Example**

**Evaluation Example 1: Thickness and standard deviation**

The films and laminates prepared in the Examples and Comparative Examples were each measured for the thickness for the entire width thereof and the thickness deviation thereof.

The biaxially oriented films prepared in Examples 1-1 to 1-5 and Comparative Examples 1-1 to 1-3 were each measured for the thickness d (nm) thereof using an electric micrometer (Millitron 1245D, manufacturer: FEINPRUF) at an interval of 5 cm in the transverse direction. The thickness deviation was then calculated by the following Equation 3.

Meanwhile, the laminates prepared in Examples 2-1 to 2-6 and Comparative Examples 2-1 to 2-3 were each measured for the thickness d (nm) thereof using an electric micrometer (Millitron 1245D, manufacturer: FEINPRUF) at an interval of 5 cm in the transverse direction. The thickness deviation was then calculated by the following Equation 3.

<Equation 3>

Thickness deviation = maximum thickness in the transverse direction – minimum thickness in the transverse direction

**Evaluation Example 2: Tensile strength**

Film and laminate specimens were each prepared to have a length of 100 mm and a width of 15 mm according to ASTM D882, it was mounted in a universal testing machine (UTM, model name 5966) of INSTRON such that the length between the chucks was 50 mm, a test was performed at a tensile speed of 200 mm/minute at room temperature of 25°C, and it was calculated by the program built in the equipment.

$TS_{MD}$ is the tensile strength of the biaxially oriented film specimen or the laminate specimen in the longitudinal direction, and $TS_{TD}$ is the tensile strength of the biaxially oriented film specimen or the laminate specimen in the transverse direction.

**Evaluation Example 3: Modulus**

The biaxially oriented films and laminates prepared in the Examples and Comparative Examples were each made to a specimen having a length of 100 mm and a width of 15 mm according to ASTM D882, it was mounted in a universal testing machine (UTM, model name 5966) of INSTRON such that the length between the chucks was 50 mm, a test was performed at a tensile speed of 200 mm/minute, and the modulus (kgf/mm$^2$) was calculated by the program built in the equipment.

In addition, the modulus of the biaxially oriented film specimens or the laminate specimens in the longitudinal direction (MD) and the modulus thereof in the transverse direction (TD) were each measured.

**Evaluation Example 4: Heat shrinkage rate**

The films and laminates prepared in the Examples and Comparative Examples were each cut regardless of the direction to prepare a specimen having a length of 150 mm and a width of 1.5 cm. The initial length at room temperature and the length of the biaxially oriented film specimen or the laminate specimen immediately after it had been left in a hot air oven at 100°C for 5 minutes were measured. The heat shrinkage rate was evaluated by the following Equation 1-2 and Equation 2-2:

<Equation 1-2>

$$\text{Heat shrinkage rate } (S_{100}) = \frac{L_{25} - L_{100}}{L_{25}} \times 100$$

In Equation 1-2, $L_{25}$ is the initial length (mm) of the biaxially oriented film specimen at 25°C, and $L_{100}$ is the length (mm) of the biaxially oriented film specimen after it has been left for 5 minutes in a hot air oven at 100°C.

<Equation 2-2>

$$\text{Heat shrinkage rate } (S_{100}) = \frac{L_{25} - L_{100}}{L_{25}} \times 100$$

In Equation 2-2, $L_{25}$ is the initial length (mm) of the laminate specimen at 25°C, and $L_{100}$ is the length (mm) of the laminate specimen after it has been left for 5 minutes in a hot air oven at 100°C.

$S_{MD}100$ is the heat shrinkage rate of the biaxially oriented film specimen or the laminate specimen in the longitudinal direction, and $S_{TD}100$ is the tensile strength of the biaxially oriented film specimen or the laminate specimen in the transverse direction.

**Evaluation Example 5: Haze and light transmittance**

The films and laminates prepared in the Examples and Comparative Examples were each measured for haze and light transmittance according to ASTM D1003 using a haze meter (Haze Gardner, Gardner BYK).

**Evaluation Example 6: Noise level**

For a biaxially oriented film, a sound level meter (auditory correction circuit: A characteristic, dynamic characteristic: fast mode) of Class 2 or higher specified in KS C IEC61672-1 was directed to a noise source, and the maximum noise level was measured once when a specimen of the biaxially oriented film having a width of 21 cm and a length of 29.5 cm was shaken at a speed of 120 times/minute for 1 minute at a height of 1.2 to 1.5 m from the ground (if there was an obstacle exceeding 1.5 m in height at the measurement point, it was measured at a point about 1.0 to 3.5 m away from the obstacle in the direction of the noise source). The noise level was measured 5 times in the same way to obtain an average noise level (dB).

Meanwhile, for a laminate, a sound level meter (auditory correction circuit: A characteristic, dynamic characteristic: fast mode) of Class 2 or higher specified in KS C IEC61672-1 was directed to a noise source, and the maximum noise level was measured once when a specimen of the laminate having a width of 21 cm and a length of 29.5 cm was folded and unfolded 10 times for 10 seconds at a height of 1.2 to 1.5 m from the ground (if there was an obstacle exceeding 1.5 m in height at the measurement point, it was measured at a point about 1.0 to 3.5 m away from the obstacle in the direction of the noise source). The noise level was measured 5 times in the same way to obtain an average noise level (dB).

**Evaluation Example 7: Loop stiffness**

The loop stiffness was measured as the load at the center of a loop in which a biaxially oriented film specimen and a laminate specimen with a width of 1.5 cm and a length of 18 cm were each fixed in a loop shape to a loop stiffness tester (TOYOSEIKI) according to ASTM D747.

$LS_{MD}$ is the loop stiffness of the biaxially oriented film specimen or the laminate specimen in the longitudinal direction, and $LS_{TD}$ is the loop stiffness of the biaxially oriented film specimen or the laminate specimen in the transverse direction.

**Evaluation Example 8: LSN (flexible noise composite index)**

The LSN of the biaxially oriented film represented by the following Equation 1-1 was obtained from the noise level and loop stiffness of Evaluation Examples 6 and 7.

<Equation 1-1>

$$LSN = N_{AVG} \times LS$$

In Equation 1-1, $N_{AVG}$ is the average noise level (dB), exclusive of units, calculated by measuring the maximum noise level 5 times in which a sound level meter of Class 2 specified in KS C IEC61672-1 is directed to a noise source, and a biaxially oriented film specimen with a width of 21 cm and a length of 29.5 cm is shaken at a height of 1.2 to 1.5 m from the ground at a speed of 120 times/minute for 1 minute.

LS is the loop stiffness (gf), exclusive of units, measured as the load at the center of a loop in which a biaxially

oriented film specimen with a width of 1.5 cm and a length of 18 cm is fixed in a loop shape to a loop stiffness tester according to ASTM D747.

The $LSN_{MD}$ is the LSN of the biaxially oriented film in the longitudinal direction, and the $LSN_{TD}$ is the LSN of the biaxially oriented film specimen in the transverse direction.

Meanwhile, the LSN of the laminate represented by the following Equation 2-1 was obtained from the noise level and loop stiffness of Evaluation Examples 6 and 7.

<Equation 2-1>

$$LSN = N_{AVG} \times LS$$

In Equation 2-1, $N_{AVG}$ is an average noise level (dB), exclusive of units, calculated by measuring the maximum noise level 5 times in which a sound level meter of Class 2 specified in KS C IEC61672-1 is directed to a noise source, and a laminate specimen with a width of 21 cm and a length of 29.5 cm is folded and unfolded 10 times for 10 seconds at a height of 1.2 to 1.5 m from the ground.

LS is the loop stiffness (gf), exclusive of units, measured as the load at the center of a loop in which a laminate specimen with a width of 1.5 cm and a length of 18 cm is fixed in a loop shape to a loop stiffness tester according to ASTM D747.

The $LSN_{MD}$ is the LSN of the laminate in the longitudinal direction, and the $LSN_{TD}$ is the LSN of the laminate in the transverse direction.

**Evaluation Example 9: Molding index**

The molding index (FI) of the biaxially oriented film and laminate represented by the following Equations 1-3 and 2-3 was obtained from the tensile strength and loop stiffness of Evaluation Examples 2 and 7.

<Equation 1-3>

$$\text{Molding index (FI)} = \frac{TS}{LS}$$

In Equation 1-3, TS is the tensile strength ($kgf/mm^2$), exclusive of units, measured at room temperature for a biaxially oriented film specimen that had been cut to have a length of about 100 mm and a width of 15 mm according to ASTM D882, and it was mounted in a universal testing machine (UTM, model name 5966) of INSTRON such that the length between the chucks was 50 mm.

LS is as defined above.

<Equation 2-3>

$$\text{Molding index (FI)} = \frac{TS}{LS}$$

In Equation 2-3, TS is the tensile strength ($kgf/mm^2$), exclusive of units, measured at room temperature for a laminate specimen that has been cut to have a length of about 100 mm and a width of 15 mm according to ASTM D882 and mounted between the chucks of a universal testing machine (UTM) in a distance of 50 mm.

LS is as defined above.

$FI_{MD}$ is the molding index of the biaxially oriented film specimen or the laminate specimen in the longitudinal direction, and $FI_{TD}$ is the molding index of the biaxially oriented film specimen or the laminate specimen in the transverse direction.

[Table 3]

| Film | Example | | | | | Comparative Example | | |
|---|---|---|---|---|---|---|---|---|
| | 1-1 | 1-2 | 1-3 | 1-4 | 1-5 | 1-1 | 1-2 | 1-3 |
| Thickness TD (μm) | 19.98 | 20.54 | 21.02 | 20.52 | 20 | 20.2 | 20 | 20 |
| Thickness deviation (μm) | 6.5 | 4.1 | 3.2 | 8.7 | 9.1 | 8.3 | 15.7 | 11.3 |

(continued)

| Film | | Example | | | | | Comparative Example | | |
|---|---|---|---|---|---|---|---|---|---|
| | | 1-1 | 1-2 | 1-3 | 1-4 | 1-5 | 1-1 | 1-2 | 1-3 |
| Mechanical properties | Tensile strength ($TS_{MD}$) ($kgf/mm^2$) | 15.5 | 14.8 | 13.2 | 9.8 | 16.7 | 17 | 4.2 | 14.2 |
| | Tensile strength ($TS_{TD}$) ($kgf/mm^2$) | 19.8 | 18.5 | 16.5 | 11.9 | 23.8 | 25.3 | 5.6 | 4.5 |
| | Modulus MD ($kgf/mm^2$) | 301 | 299 | 280 | 251 | 331 | 348 | 212 | 278 |
| | Modulus TD ($kgf/mm^2$) | 321 | 281 | 276 | 241 | 353 | 399 | 228 | 182 |
| Thermal properties | Heat shrinkage rate ($S_{MD100}$) (%) | 3 | 3.3 | 4 | 6.5 | 3.8 | 3.4 | 17.2 | 5.6 |
| | Heat shrinkage rate ($S_{TD100}$) (%) | 3.5 | 4 | 4.4 | 7 | 3.6 | 2.2 | 19.4 | 1.2 |
| Optical properties | Haze (%) | 3.7 | 4.3 | 3.3 | 6.8 | 15.8 | 2.6 | 14.1 | 3.6 |
| | Light transmittance (%) | 94.6 | 93.7 | 93.3 | 90.6 | 82.3 | 95 | 85.6 | 93.8 |
| Noise level ($N_{AVG}$) (dB) | | 83.6 | 82.2 | 81 | 77.5 | 85.6 | 86.5 | 72.8 | 80.7 |
| Loop stiffness ($LS_{MD}$) (gf) | | 0.21 | 0.19 | 0.18 | 0.15 | 0.21 | 0.24 | 0.06 | 0.15 |
| Loop stiffness ($LS_{TD}$) (gf) | | 0.22 | 0.18 | 0.16 | 0.14 | 0.22 | 0.25 | 0.08 | 0.07 |
| $LSN_{MD}$ ($N_{AVG} \times LS_{MD}$) | | 17.56 | 15.62 | 14.58 | 11.63 | 17.98 | 20.76 | 4.37 | 12.11 |
| $LSN_{TD}$ ($N_{AVG} \times LS_{TD}$) | | 18.39 | 14.80 | 12.96 | 10.85 | 18.83 | 21.63 | 5.82 | 5.65 |
| $FI_{MD}$ ($TS_{MD}/LS_{MD}$) | | 73.81 | 77.89 | 73.33 | 65.33 | 79.52 | 70.83 | 70.00 | 94.67 |
| $FI_{TD}$ ($TS_{TD}/LS_{TD}$) | | 90.0 | 102.8 | 103.1 | 85.0 | 108.2 | 101.2 | 70.0 | 64.3 |

As can be seen from Table 3 above, the biaxially oriented films of the Examples comprising polylactic acid (PLA) and polyhydroxyalkanoate (PHA) in a specific content range and having an LSN value of 20 or less had excellent strength and flexibility at the same time, along with excellent thermal properties and improved noise level.

Specifically, the biaxially oriented films of Examples 1-1 to 1-5 had a tensile strength of 9 to 25 $kgf/mm^2$ in an appropriate range and a loop stiffness of 0.1 to 0.23 gf, indicating excellent flexibility. In addition, the noise level was as low as 86 dB or less, and the heat shrinkage rate was very low (15% or less) even at a high temperature of 100°C, indicating that both mechanical properties and thermal properties were excellent.

In contrast, in the biaxially oriented film of Comparative Example 1-1 comprising no polyhydroxyalkanoate (PHA), the LSN exceeded 20, so that the loop stiffness of the film was increased, and the flexibility was decreased. And the noise level was increased. In particular, the loop stiffness was increased by 60% or more and the noise level was increased by 10% or more as compared with the biaxially oriented film of Examples 1-4.

Meanwhile, in the biaxially oriented film of Comparative Example 1-2 comprising an excess of 30% by weight or more of polyhydroxyalkanoate (PHA), the tensile strength was significantly decreased to about 4 to 6 $kgf/mm^2$, and the heat shrinkage rate was significantly increased to 17 to 20% at a high temperature of 100°C. In addition, the haze was increased to 14% or more, and light transmittance was about 85%, indicating significantly deteriorated optical properties.

Further, in the uniaxially oriented film of Comparative Example 1-3, the thickness deviation was increased to 11.3 $\mu$m by 250% or more, the strength in the non-stretched transverse direction (TD) was significantly decreased, and the heat shrinkage rate was increased by 40% or more as compared with the biaxially oriented film of Example 1-3 comprising the same content of an amorphous polyhydroxyalkanoate (PHA).

Meanwhile, the biaxially stretched films of Examples 1-1 to 1-4 comprising an amorphous polyhydroxyalkanoate (PHA) had a low haze of 6.8% or less and an excellent light transmittance of 90% or more, whereas, in the biaxially oriented film of Examples 1-5 comprising a crystalline polyhydroxyalkanoate (PHA), the haze was increased, and the light transmittance was deteriorated, indicating deteriorated optical properties, as compared with the biaxially oriented film of Examples 1-3 comprising the same content of polyhydroxyalkanoate (PHA).

[Table 4]

| Laminate | | Example | | | | | | Comparative Example | | |
|---|---|---|---|---|---|---|---|---|---|---|
| | | 2-1 | 2-2 | 2-3 | 2-4 | 2-5 | 2-6 | 2-1 | 2-2 | 2-3 |
| Mechanical properties | Tensile strength ($TS_{MD}$) (kgf/mm$^2$) | 13.9 | 13.3 | 11.6 | 8.8 | 13.2 | 9.1 | 14.5 | 6.4 | Failed to form a film due to delamination during stretching |
| | Tensile strength ($TS_{TD}$) (kgf/mm$^2$) | 16.8 | 15.2 | 13.5 | 10.9 | 15.8 | 10.8 | 20.6 | 7.8 | |
| | Modulus MD (kgf/mm$^2$) | 330 | 317 | 299 | 262 | 321 | 319 | 348 | 241 | |
| | Modulus TD (kgf/mm$^2$) | 341 | 323 | 315 | 279 | 340 | 356 | 389 | 255 | |
| Thermal properties | Heat shrinkage rate ($S_{MD100}$) (%) | 3.67 | 4.5 | 4.7 | 5.7 | 3.2 | 5.1 | 3.13 | 15.3 | |
| | Heat shrinkage rate ($S_{TD100}$) (%) | 3.80 | 5.0 | 5.5 | 6.0 | 3.4 | 5.9 | 3.50 | 16.8 | |
| Optical properties | Haze (%) | 2.7 | 3.6 | 4.3 | 6.8 | 9.8 | 5.7 | 2.4 | 10.2 | |
| | Light transmittance (%) | 94.6 | 94.6 | 93.6 | 90.6 | 90.0 | 91.3 | 94.7 | 88.9 | |
| Noise level ($N_{AVG}$) (dB) | | 84.8 | 83.6 | 82.3 | 78.5 | 86 | 83.5 | 86.7 | 73.3 | |
| Loop stiffness ($LS_{MD}$) (gf) | | 0.19 | 0.15 | 0.13 | 0.11 | 0.19 | 0.14 | 0.21 | 0.05 | |
| Loop stiffness ($LS_{TD}$) (gf) | | 0.17 | 0.16 | 0.13 | 0.12 | 0.18 | 0.15 | 0.18 | 0.04 | |
| $LSN_{MD}$ ($N_{AVG} \times LS_{MD}$) | | 16.11 | 12.54 | 10.70 | 8.64 | 16.34 | 11.69 | 18.21 | 3.67 | |
| $LSN_{TD}$ ($N_{AVG} \times LS_{TD}$) | | 14.42 | 13.38 | 10.70 | 9.42 | 15.48 | 12.53 | 15.61 | 2.93 | |
| $FI_{MD}$ ($TS_{MD}/LS_{MD}$) | | 73.16 | 88.67 | 89.23 | 80.00 | 69.47 | 65.00 | 69.05 | 128.00 | |
| $FI_{TD}$ ($TS_{TD}/LS_{TD}$) | | 98.82 | 95.00 | 103.85 | 90.83 | 87.78 | 72.00 | 114.44 | 195.00 | |
| Thermal adhesive strength (kgf/mm$^2$) | | 1.1 | 1.54 | 1.62 | 0.9 | 1.31 | 1.73 | 1.01 | 1.25 | |

As can be seen from Table 4 above, the laminates of the Examples comprising a first layer comprising a first polylactic acid (PLA) and polyhydroxyalkanoate (PHA) in a specific content range and a second layer comprising a second polylactic acid (PLA) had excellent strength and flexibility at the same time, along with excellent thermal properties, an improved noise level, and excellent interlayer adhesive characteristics by virtue of good interlayer compatibility between the first layer and the second layer.

Specifically, the laminates of Examples 2-1 to 2-6 had a low noise level of 86 dB or less and a loop stiffness of 0.1 to 0.2 gf, indicating excellent flexibility. In addition, they had a tensile strength ($TS_{MD}$) in the longitudinal direction (MD) of 7 to 14 kgf/mm$^2$ in an appropriate range, a very low heat shrinkage rate of 15% or less even at a high temperature of 100°C, a haze of 10% or less, and a light transmittance of 90% or more, indicating that the mechanical properties, thermal properties, and optical properties were all excellent.

In contrast, in the laminate of Comparative Example 2-1 comprising no polyhydroxyalkanoate (PHA) in the first layer, the loop stiffness of the laminate was increased, indicating deteriorated flexibility, and the noise level was increased, in particular, the roof stiffness and noise level were increased as compared with the laminate of Example 2-1 having the same composition of the second layer.

Meanwhile, in the laminate of Comparative Example 2-2 comprising an excess of 30% by weight or more of polyhydroxyalkanoate (PHA) in the first layer, the thickness deviation of the laminate was increased, the tensile strength in the longitudinal direction ($TS_{MD}$) and the tensile strength in the transverse direction ($TS_{TD}$) were decreased to about 6.4 kgf/mm$^2$ and 7.8 kgf/mm$^2$, respectively, the heat shrinkage rate at a high temperature of 100°C was significantly increased to 15.3 to 16.8%, and the optical properties were deteriorated as well.

Further, in the laminate of Comparative Example 2-3 comprising polytriethylene terephthalate (PTT) instead of the second polylactic acid in the second layer, it was impossible to form a stretched film (film making) due to delamination caused by insufficient interlayer adhesive characteristics for lack of compatibility between the first layer and the second layer during stretching.

In contrast, in the laminates of Examples 2-1 to 2-6 comprising a first layer comprising a first polylactic acid (PLA) and polyhydroxyalkanoate (PHA); and a second layer disposed on one side of the first layer and comprising a second polylactic acid (PLA), the compatibility was good, resulting in excellent adhesive characteristics between the first layer and the second layer upon stretching.

Meanwhile, in the laminate of Example 2-5 comprising a crystalline polyhydroxyalkanoate (PHA), it had an advantage in that the heat shrinkage rate was significantly reduced, drying for the extrusion step in the process could be readily performed, and bubbles were less generated during extrusion, as compared with the laminates of Comparative Examples 2-1 to 2-3. On the other hand, the modulus and noise level were somewhat increased as compared with the laminates of Examples 2-1 to 2-4 comprising an amorphous polyhydroxyalkanoate (PHA) in the first layer.

Further, in the laminate of Examples 2-6 in which the weight ratio of L-PLA and D-PLA was 62:38 with an increased content of D-PLA in the second layer, the mechanical properties, thermal properties, optical properties, noise level, and flexibility were improved as compared with the laminates of Comparative Examples 2-1 to 2-3. On the other hand, the thickness deviation of the laminate was relatively increased, and the heat shrinkage rate was increased, as compared with the laminate of Example 2-3 having the same composition of the first layer. In addition, the windability was insufficient during film production and processing, and the processability and productivity were somewhat lowered.

[Reference Numerals of the Drawings]

1: laminate
11: second layer
12: first layer
13: corona layer
14: coating layer

## Claims

1. A biaxially oriented film, which comprises polylactic acid (PLA) and polyhydroxyalkanoate (PHA), wherein the amount of the polyhydroxyalkanoate (PHA) is greater than 0% by weight to less than 30% by weight based on the total weight of the biaxially oriented film, and when the thickness of the film is 19 to 21 μm, the LSN as represented by the following Equation 1-1 is 20 or less:

<Equation 1-1>

$$LSN = N_{AVG} \times LS$$

in Equation 1-1, $N_{AVG}$ is the average noise level (dB), exclusive of units, calculated by measuring the maximum noise level 5 times in which a sound level meter of Class 2 specified in KS C IEC61672-1 is directed to a noise source, and a biaxially oriented film specimen with a width of 21 cm and a length of 29.5 cm is shaken at a height of 1.2 to 1.5 m from the ground at a speed of 120 times/minute for 1 minute, and
LS is the loop stiffness (gf), exclusive of units, measured as the load at the center of a loop in which a biaxially oriented film specimen with a width of 1.5 cm and a length of 18 cm is fixed in a loop shape to a loop stiffness tester according to ASTM D747.

**2.** The biaxially oriented film of claim 1, wherein $N_{AVG}$ is 86 dB or less, and LS is 0.10 to 0.23 gf.

**3.** The biaxially oriented film of claim 1, which has a molding index (FI) of 65 or more as represented by the following Equation 1-3:

<Equation 1-3>

$$\text{Molding index (FI)} = \frac{TS}{LS}$$

in Equation 1-3, TS is the tensile strength (kgf/mm$^2$), exclusive of units, measured at room temperature for a specimen that has been cut to have a length of 100 mm and a width of 15 mm according to ASTM D882 and mounted between the chucks of a universal testing machine (UTM) in a distance of 50 mm, and
LS is the loop stiffness (gf), exclusive of units, measured as the load at the center of a loop in which a biaxially oriented film specimen with a width of 1.5 cm and a length of 18 cm is fixed in a loop shape to a loop stiffness tester according to ASTM D747.

**4.** The biaxially oriented film of claim 3, which satisfies at least one selected from the following characteristics:

an $LSN_{MD}$ in the longitudinal direction (MD) of 5 to 20;
an $LSN_{TD}$ in the transverse direction (TD) of 5 to 20;
a molding Index ($FI_{MD}$) in the longitudinal direction (MD) of 65 to 90;
a molding Index ($FI_{TD}$) in the transverse direction (TD) of 80 to 110;
a tensile strength ($TS_{MD}$) in the longitudinal direction (MD) of 9 to 25 kgf/mm$^2$;
a tensile strength ($TS_{TD}$) in the transverse direction (TD) of 9 to 25 kgf/mm$^2$;
a thickness deviation of 10 $\mu$m or less relative to the thickness of the entire width of the film;
a haze 10% or less; and
a heat shrinkage rate ($S_{100}$) of 15% or less as represented by the following Equation 1-2:

<Equation 1-2>

$$\text{Heat shrinkage rate } (S_{100}) = \frac{L_{25} - L_{100}}{L_{25}} \times 100$$

in Equation 1-2, $L_{25}$ is the initial length (mm) of the biaxially oriented film specimen at 25°C, and $L_{100}$ is the length (mm) of the biaxially oriented film specimen after it has been left for 5 minutes in a hot air oven at 100°C.

**5.** The biaxially oriented film of claim 1, wherein the polyhydroxyalkanoate (PHA) is a copolymerized polyhydroxyalkanoate (PHA), and the copolymerized polyhydroxyalkanoate (PHA) comprises at least one unit of the following Formula 1 and at least one unit of the following Formula 2, respectively:

[Formula 1]

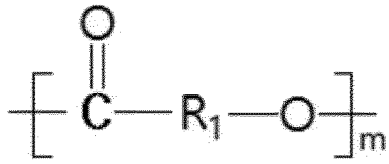

in Formula 1, $R_1$ is substituted $C_1$-$C_8$ alkylene, and m is an integer of 1 or more,

[Formula 2]

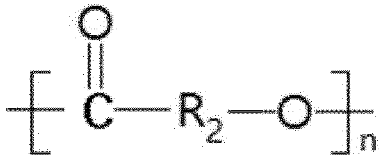

in Formula 2, $R_2$ is substituted or unsubstituted $C_1$-$C_8$ alkylene, and n is an integer of 1 or more.

**6.** The biaxially oriented film of claim 5, wherein the copolymerized polyhydroxyalkanoate (PHA) comprises the unit of Formula 2 in an amount of 1% by weight to 60% by weight or less based on the total weight of the copolymerized polyhydroxyalkanoate (PHA).

**7.** A laminate, which comprises a first layer comprising a first polylactic acid (PLA) and polyhydroxyalkanoate (PHA); and a second layer disposed on one side of the first layer and comprising a second polylactic acid (PLA), wherein the first layer comprises greater than 0% by weight to less than 30% by weight of the polyhydroxyalkanoate (PHA) based on the total weight of the first layer.

**8.** The laminate of claim 7, wherein the polyhydroxyalkanoate (PHA) is a copolymerized polyhydroxyalkanoate (PHA), and the copolymerized polyhydroxyalkanoate (PHA) comprises at least one unit of the following Formula 1 and at least one unit of the following Formula 2, respectively:

[Formula 1]

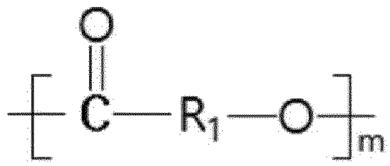

in Formula 1, $R_1$ is substituted $C_1$-$C_8$ alkylene, and m is an integer of 1 or more,

[Formula 2]

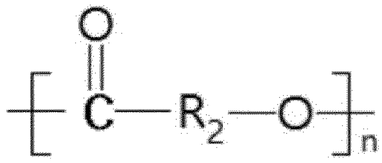

in Formula 2, $R_2$ is substituted or unsubstituted $C_1$-$C_8$ alkylene, and n is an integer of 1 or more.

**9.** The laminate of claim 8, wherein the copolymerized polyhydroxyalkanoate (PHA) comprises the unit of Formula 2 in an amount of 1% by weight to 60% by weight or less based on the total weight of the copolymerized polyhydroxyalkanoate (PHA).

**10.** The laminate of claim 7, wherein the second layer comprises a mixture of an L-isomer and a D-isomer of the second polylactic acid, and the second layer comprises the D-isomer in an amount of 5% by weight to 30% by weight based on the total weight of the second polylactic acid.

**11.** The laminate of claim 7, which further comprises a corona layer, a coating layer, or both disposed on the other side of the first layer,

wherein the corona layer is formed by corona treatment of the first layer and comprises a polar functional group selected from the group consisting of -CO, -COOH, and -OH,
the surface tension of the corona-treated side of the first layer is 38 dyn/cm or more,
the coating layer comprises a primer coating layer, and
the primer coating layer is formed by primer treatment of the other side of the first layer or the other side of the corona layer and has a surface resistance of 0.1 to 30 Ω/□.

**12.** The laminate of claim 7, which has a tensile strength ($TS_{MD}$) of 7 to 14 kgf/mm$^2$ in the longitudinal direction (MD) and a tensile strength ($TS_{TD}$) of 8 to 20 kgf/mm$^2$ in the transverse direction (TD), and the thermal adhesive strength of the first layer and the second layer is 0.7 to 2.0 kgf/mm$^2$.

**13.** A process for preparing a laminate, which comprises:

preparing a first resin comprising a first polylactic acid (PLA) and polyhydroxyalkanoate (PHA) and a second resin comprising a second polylactic acid (PLA) (step 1);
melt-coextruding the first resin and the second resin to obtain a two-layer laminated sheet (step 2); and
biaxially stretching and heat-setting the laminated sheet to obtain a laminate (step 3),
wherein the laminate comprises a first layer comprising the first polylactic acid (PLA) and the polyhydroxyalkanoate (PHA); and a second layer disposed on one side of the first layer and comprising the second polylactic acid (PLA), and
the first layer comprises greater than 0% by weight to less than 30% by weight of the polyhydroxyalkanoate (PHA) based on the total weight of the first layer.

**14.** An environment-friendly packaging material, which comprises the biaxially oriented film of claim 1.

Fig. 1

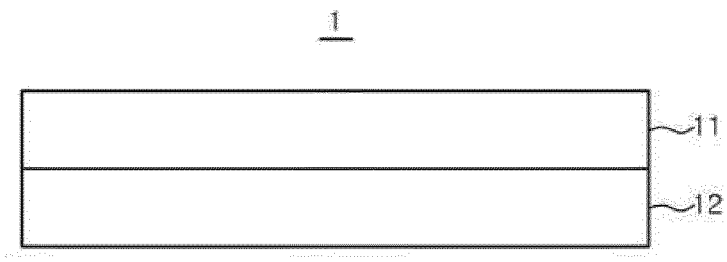


Fig. 2

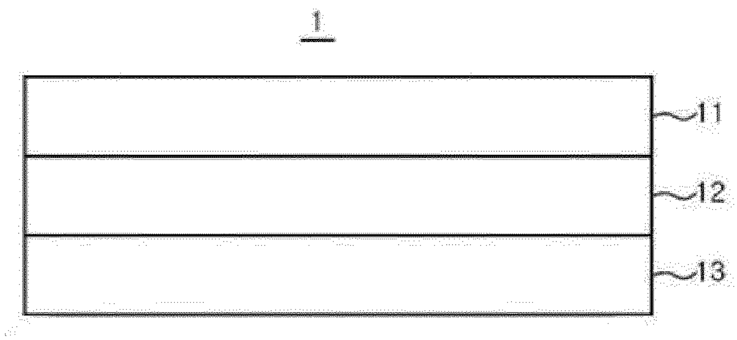


Fig. 3

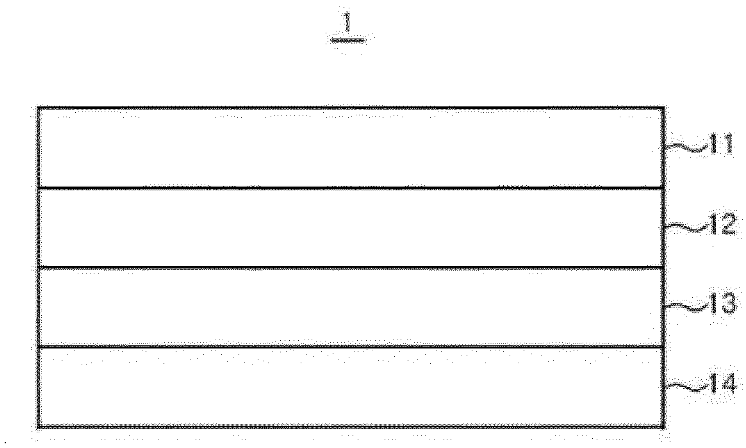

Fig. 4

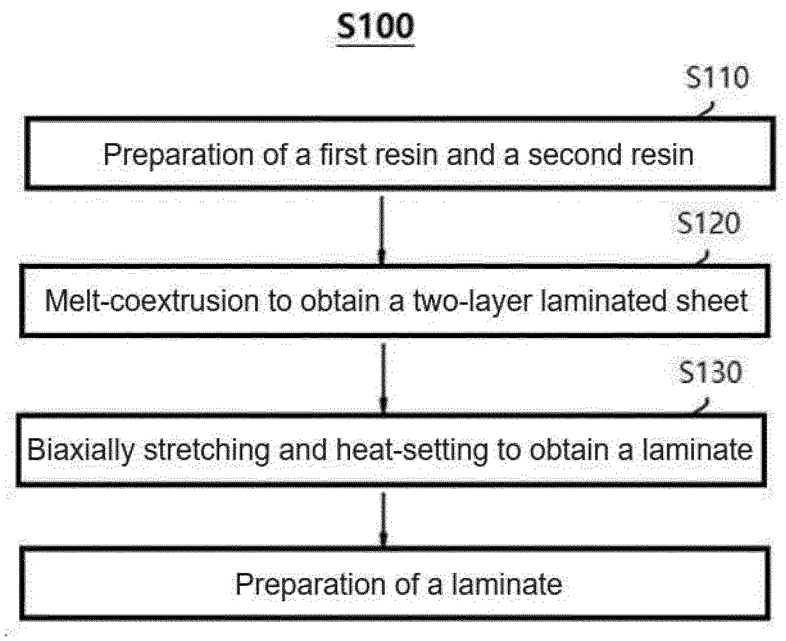
S100
S110
Preparation of a first resin and a second resin
S120
Melt-coextrusion to obtain a two-layer laminated sheet
S130
Biaxially stretching and heat-setting to obtain a laminate
Preparation of a laminate

**INTERNATIONAL SEARCH REPORT**

International application No.
**PCT/KR2022/005195**

**A. CLASSIFICATION OF SUBJECT MATTER**

**B32B 27/36**(2006.01)i; **B32B 37/15**(2006.01)i; **C08L 67/06**(2006.01)i; **C08J 5/18**(2006.01)i; **C08L 67/04**(2006.01)i; **B29C 55/12**(2006.01)i

According to International Patent Classification (IPC) or to both national classification and IPC

**B. FIELDS SEARCHED**

Minimum documentation searched (classification system followed by classification symbols)

B32B 27/36(2006.01); B32B 27/06(2006.01); B65D 1/34(2006.01); B65D 1/40(2006.01); C08J 5/18(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이축연신(biaxial stretching), 폴리락트산(polylactic acid), 폴리하이드록시알카노에이트(Polyhydroxyalkanoate), 필름(film), 유연소음 복합 지수(LSN), 적층체(laminate), 코로나(corona), 친환경 포장재(Eco-friendly packaging)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2010-0004420 A (SKC CO., LTD.) 13 January 2010 (2010-01-13)<br>See claims 1-7; paragraph [0001]; and example 1. | 1-6,14<br>7-13 |
| Y | KR 10-0563799 B1 (THE PROCTER & GAMBLE COMPANY) 28 March 2006 (2006-03-28)<br>See claims 11, 19 and 21; paragraphs [0057]-[0058]; and example 3. | 7-13 |
| Y | KR 10-2003-0022859 A (MITSUBISHI POLYESTER FILM GMBH) 17 March 2003 (2003-03-17)<br>See claim 11; and paragraphs [0089] and [0094]. | 11 |
| A | KR 10-2015-0125052 A (LG HAUSYS, LTD.) 09 November 2015 (2015-11-09)<br>See entire document. | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 July 2022** | **13 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT

International application No.
**PCT/KR2022/005195**

**C. DOCUMENTS CONSIDERED TO BE RELEVANT**

| Category* | Citation of document, with indication, where appropriate, of the relevant passages | Relevant to claim No. |
|---|---|---|
| A | KR 10-2015-0120983 A (U.S. PACIFIC NONWOVENS INDUSTRY LIMITED) 28 October 2015 (2015-10-28)<br>See entire document. | 1-14 |

Form PCT/ISA/210 (second sheet) (July 2019)

**INTERNATIONAL SEARCH REPORT**
**Information on patent family members**

International application No.
**PCT/KR2022/005195**

| Patent document cited in search report | Publication date (day/month/year) | Patent family member(s) | Publication date (day/month/year) |
|---|---|---|---|
| KR 10-2010-0004420 A | 13 January 2010 | KR 10-0985438 B1 | 06 October 2010 |
| | | WO 2010-002205 A2 | 07 January 2010 |
| | | WO 2010-002205 A3 | 08 April 2010 |
| KR 10-0563799 B1 | 28 March 2006 | AU 2002-254207 B2 | 16 February 2006 |
| | | AU 2002-258508 B2 | 02 February 2006 |
| | | BR 0208376 A | 15 June 2004 |
| | | BR 0208377 A | 15 June 2004 |
| | | CA 2440544 A1 | 03 October 2002 |
| | | CA 2440545 A1 | 03 October 2002 |
| | | CA 2440545 C | 10 October 2006 |
| | | CN 1247695 C | 29 March 2006 |
| | | CN 1500114 A | 26 May 2004 |
| | | CN 1501992 A | 02 June 2004 |
| | | EP 1373378 A1 | 02 January 2004 |
| | | EP 1381720 A1 | 21 January 2004 |
| | | EP 1381720 B1 | 05 September 2012 |
| | | ES 2397100 T3 | 04 March 2013 |
| | | JP 2004-532360 A | 21 October 2004 |
| | | JP 2004-536897 A | 09 December 2004 |
| | | JP 4181412 B2 | 12 November 2008 |
| | | KR 10-0544852 B1 | 24 January 2006 |
| | | KR 10-2003-0088474 A | 19 November 2003 |
| | | MX PA03008883 A | 07 March 2005 |
| | | MX PA03008886 A | 08 December 2003 |
| | | PT 1381720 E | 25 January 2013 |
| | | US 2002-0143116 A1 | 03 October 2002 |
| | | US 2002-0143136 A1 | 03 October 2002 |
| | | US 6808795 B2 | 26 October 2004 |
| | | US 6905987 B2 | 14 June 2005 |
| | | WO 02-077080 A1 | 03 October 2002 |
| | | WO 02-077335 A1 | 03 October 2002 |
| KR 10-2003-0022859 A | 17 March 2003 | AT 309290 T | 15 November 2005 |
| | | DE 10035328 A1 | 31 January 2002 |
| | | EP 1309651 A1 | 14 May 2003 |
| | | EP 1309651 B1 | 09 November 2005 |
| | | JP 2004-504459 A | 12 February 2004 |
| | | US 2004-0028928 A1 | 12 February 2004 |
| | | US 7122239 B2 | 17 October 2006 |
| | | WO 02-08317 A1 | 31 January 2002 |
| KR 10-2015-0125052 A | 09 November 2015 | CN 106232484 A | 14 December 2016 |
| | | CN 106232484 B | 14 May 2019 |
| | | JP 2017-515757 A | 15 June 2017 |
| | | US 2017-0043930 A1 | 16 February 2017 |
| | | WO 2015-167135 A1 | 05 November 2015 |
| KR 10-2015-0120983 A | 28 October 2015 | AU 2013-378663 A1 | 27 August 2015 |
| | | AU 2013-378663 B2 | 07 December 2017 |
| | | BR 112015017629 A2 | 11 July 2017 |
| | | CA 2891259 A1 | 21 August 2014 |
| | | CA 2891259 C | 29 December 2020 |
| | | EP 2913362 A1 | 02 September 2015 |

Form PCT/ISA/210 (patent family annex) (July 2019)

**INTERNATIONAL SEARCH REPORT**
**Information on patent family members**

International application No.
**PCT/KR2022/005195**

| Patent document cited in search report | Publication date (day/month/year) | Patent family member(s) | Publication date (day/month/year) |
|---|---|---|---|
| | | EP 2913362 A4 | 06 July 2016 |
| | | HK 1214288 A1 | 22 July 2016 |
| | | JP 2016-513153 A | 12 May 2016 |
| | | MX 2015002788 A | 29 October 2015 |
| | | NZ 705709 A | 28 June 2019 |
| | | PH 12015501613 A1 | 28 September 2015 |
| | | PH 12015501613 B1 | 28 September 2015 |
| | | RU 2015137592 A | 23 March 2017 |
| | | RU 2640243 C2 | 27 December 2017 |
| | | SG 11201506376 A | 29 September 2015 |
| | | US 2015-0337094 A1 | 26 November 2015 |
| | | US 9994686 B2 | 12 June 2018 |
| | | WO 2014-124563 A1 | 21 August 2014 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20140106882